(19) Europäisches Patentamt / European Patent Office / Office européen des brevets

(11) **EP 1 293 598 B1**

(12) **EUROPEAN PATENT SPECIFICATION**

(45) Date of publication and mention
of the grant of the patent:
**28.05.2008 Bulletin 2008/22**

(51) Int Cl.:
***D06F 49/00*** *(2006.01)*   ***D06F 49/02*** *(2006.01)*
***D06F 23/02*** *(2006.01)*   ***D06F 33/02*** *(2006.01)*
***D06F 39/12*** *(2006.01)*

(21) Application number: **01900774.9**

(22) Date of filing: **16.01.2001**

(86) International application number:
**PCT/JP2001/000210**

(87) International publication number:
**WO 2001/079603 (25.10.2001 Gazette 2001/43)**

(54) **DRUM TYPE WASHING MACHINE AND ITS CONTROL METHOD**

TROMMELWASCHMASCHINE UND STEUERUNGSVERFAHREN DAFÜR

MACHINE A LAVER DU TYPE A TAMBOUR ET PROCEDE DE COMMANDE ASSOCIE

(84) Designated Contracting States:
**DE FR IT**

(30) Priority: **19.04.2000   JP 2000117775**
**18.09.2000   JP 2000282350**
**22.09.2000   JP 2000288626**
**24.10.2000   JP 2000323651**

(43) Date of publication of application:
**19.03.2003   Bulletin 2003/12**

(73) Proprietor: **SANYO ELECTRIC CO., LTD.**
**Moriguchi-shi, Osaka 570-8677 (JP)**

(72) Inventors:
• **YAMAMOTO, Hiroshi**
**Neyagawa-shi,**
**Osaka 572-0006 (JP)**
• **KINOUCHI, Takao**
**Neyagawa-shi,**
**Osaka 572-0024 (JP)**
• **YOKOI, Yasuhiko**
**Gunma 373-0816 (JP)**
• **NOGUCHI, Yoshiaki**
**Gunma 373-0806 (JP)**

(74) Representative: **Steil, Christian et al**
**Witte, Weller & Partner**
**Postfach 10 54 62**
**70047 Stuttgart (DE)**

(56) References cited:
EP-A- 0 903 845         EP-A2- 0 795 639
DE-A- 19 812 682       DE-A1- 10 034 630
GB-A- 2 080 836         JP-A- 10 127 974
JP-A- 11 244 591         US-A- 5 893 280

## Description

TECHNICAL FIELD

The present invention relates to a drum-type washing machine having a drum which is rotated for washing and dehydration.

PRIOR ART

Conventional drum-type washing machines have a drum rotatable about a generally horizontal rotation axis within an outer tub, and laundry is retained in the drum.

In such a conventional drum-type washing machine, an eccentric load is liable to occur due to uneven distribution of the laundry retained in the drum during dehydration thereby to cause vibrations and produce noises due to the vibrations. Particularly, greater vibrations occur at the start of the dehydration.

Conventional measures for suppression of the vibrations occurring due to the uneven distribution of the laundry are to perform a disentangling process for disentangling the laundry in water retained in the drum before the dehydration and to support the outer tub by a damper which is capable of accommodating the eccentric load caused by the unevenly distributed laundry.

With these conventional measures, the vibrations occurring at the start of the dehydration can be alleviated, but the vibrations occurring during the dehydration cannot sufficiently be suppressed. Therefore, a drum-type washing machine featuring suppressed vibrations is demanded.

Document EP-A-0903845 discloses a washing machine according to at least the preamble of claim 1 and a control method for this machine.

The drum-type washing machine is generally installed on the floor, and the height thereof (the apparent height of a housing thereof) virtually corresponds to the height of the waist of a user. The washing machine has a door provided on a front face of the housing for loading and unloading the laundry with respect to the drum. Therefore, the user has to stoop for the loading and unloading of the laundry. Accordingly, there is an inconvenience when the laundry is loaded in and unloaded from the drum.

## DISCLOSURE OF THE INVENTION

In view of the foregoing, it is an object of the present invention to provide a drum-type washing machine which is virtually free from vibrations and noises during dehydration.

It is another object of the present invention to provide a drum-type washing machine which includes a mechanism for preventing vibrations and noises even if laundry is dehydrated in an unevenly distributed state.

It is further another object of the present invention to provide an improved drum-type washing machine which ensures that laundry can easily be loaded in and unloaded from a drum.

It is still another object of the present invention to provide a drum-type washing machine control method which suppresses vibrations and noises caused by an eccentric load occurring due to uneven distribution of laundry in a drum-type washing machine.

The a foresaid objects of the present invention will be achieved by inventive features as set forth in the appended claims.

In accordance with an inventive feature as set forth in claim 1, a plurality of liquid chambers are included. The plurality of liquid chambers are provided circumferentially equidistantly around a rotation axis of a drum, and adapted to be rotated in synchronization with the drum and to retain a liquid therein with a centrifugal force. Therefore, the respective liquid chambers are filled with the liquid and, in response to detection of the magnitude and position of an eccentric load occurring due to uneven distribution of laundry in the drum, the liquid is discharged selectively from the liquid chambers to cancel the eccentric load. Thus, the eccentric load occurring due to the uneven distribution of the laundry is canceled by the liquid retained selectively in the liquid chambers even when the drum is rotated at a higher rotation speed for dehydration. Therefore, a drum-type washing machine can be provided which features suppressed vibrations and noises.

In accordance with a feature as set forth in claim 12, the magnitude of the eccentric load to be canceled can be reduced by performing a G-balancing operation for roughly distributing clustered laundry in the drum. Thus, the drum-type washing machine can perform a dehydrating process while suppressing vibrations and noises.

In accordance with a feature as set forth in claim 25, the drum is rotated while being tilted at an angle of not greater than 30 degrees with respect to a horizontal line. Thus, the drum-type washing machine ensures that the laundry can easily be loaded in and unloaded from the drum.

In accordance with a control method as set forth in claim 27, vibrations and noises can be suppressed which may be caused by an eccentric load occurring due to the uneven distribution of the laundry.

Arrangements for achieving the foregoing and other objects of the present invention will become apparent from the following description of embodiments with reference to the attached drawings.

**BRIEF DESCRIPTION OF THE DRAWINGS**

Fig. 1 is a vertical sectional view of a drum-type washing machine according to a first embodiment of the present invention;

Fig. 2 is a sectional view taken along a line A-A' in Fig. 1;

Fig. 3 is a perspective view illustrating the external appearance of a water tank provided in the drum-type washing machine of the first embodiment;

Fig. 4 is a block diagram illustrating the electrical construction of the drum-type washing machine of the first embodiment;

Figs. 5(a), 5(b) are waveform diagrams for explaining detection of an eccentric load;

Fig. 6 is a flow chart illustrating a control operation to be performed in a dehydration process in the drum-type washing machine of the first embodiment;

Figs. 7(a)-(c) are schematic diagrams illustrating the states of water in water tanks during a balancing operation in the drum-type washing machine of the first embodiment;

Fig. 8 is a schematic diagram for explaining how forces act on water retained in a water tank located at the uppermost position;

Figs. 9(a)-(c) are schematic diagrams for explaining a relationship between the amount of water remaining in water tanks and a duration of water discharge;

Fig. 10 is a vertical sectional view of a drum-type washing machine according to a second embodiment of the present invention;

Fig. 11 is a sectional view taken along a line B-B' in Fig. 10;

Fig. 12 is a flow chart illustrating a control operation to be performed in a dehydration process in the drum-type washing machine of the second embodiment;

Fig. 13 is a vertical sectional view illustrating the overall construction of a drum-type washing machine according to a third embodiment of the present invention;

Fig. 14 is a block diagram illustrating the electrical construction of the drum-type washing machine of the third embodiment;

Fig. 15 is a waveform diagram illustrating an exemplary fluctuation of an acceleration component occurring due to an eccentric load;

Figs. 16(a), 16(b) are diagrams for explaining the principle of how a microprocessor determines an eccentric load on the basis of an output of an acceleration sensor;

Fig. 17 is a flow chart illustrating a control operation to be performed by the microprocessor in a dehydration process in the drum-type washing machine of the third embodiment;

Figs. 18(a), 18 (b) are schematic diagrams illustrating the states of water tanks during rotation of a drum;

Fig. 19 is a schematic vertical sectional view illustrating the overall construction of a drum-type washing machine according to a fourth embodiment of the present invention;

Fig. 20 is a sectional view taken along a line C-C' in Fig. 19;

Fig. 21 is a perspective view illustrating the outer appearance of a water tank provided in the drum-type washing machine of the fourth embodiment;

Fig. 22 is a flow chart illustrating the outline of a control operation to be performed by a microprocessor in a dehydration process in the drum-type washing machine of the fourth embodiment;

Fig. 23 is a flow chart illustrating in detail the control operation to be performed by the microprocessor in the dehydration process in the drum-type washing machine of the fourth embodiment;

Figs. 24(a)-(c) are schematic diagrams illustrating the states of water tanks during rotation of a drum in the drum-type washing machine of the fourth embodiment;

Fig. 25 is a vertical sectional view illustrating a modification of the drum-type washing machine of the fourth embodiment; and

Fig. 26 is a vertical sectional view illustrating another modification of the drum-type washing machine of the fourth embodiment.

## EMBODIMENTS OF THE INVENTION

[First embodiment]

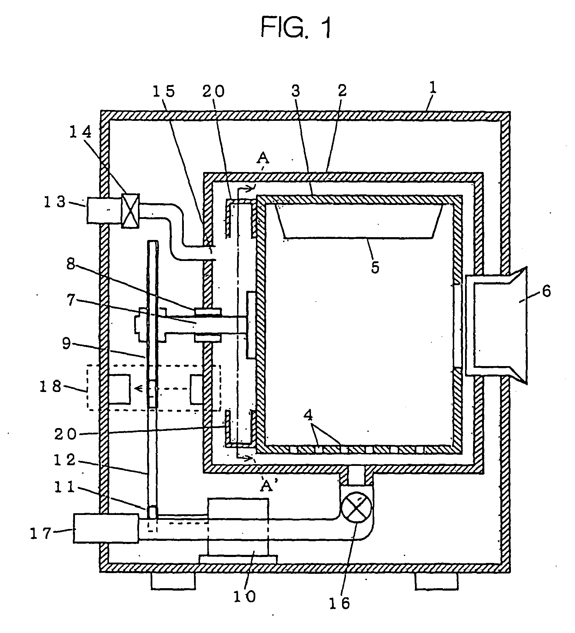

A drum-type washing machine according to a first embodiment of the present invention will hereinafter be described with reference to Figs. 1 to 9.

Fig. 1 is a vertical sectional view illustrating the overall construction of the drum-type washing machine. A cylindrical outer tub 2 is provided in a housing 1, and a cylindrical drum 3 for retaining laundry is supported by a rotation shaft 7 within the outer tub 2. A door 6 through which laundry is loaded in the drum is openably provided on a front opening of the drum 3. Baffles 5 for stirring up the laundry are provided at proper positions on an inner circumferential surface of the drum 3. A multiplicity of water communication perforations 4 are formed in a circumferential wall of the drum 3. In a washing process and a rinsing process, water supplied into the outer tub 2 flows into the drum 3 through the water communication perforations 4. In a centrifugal dehydration process, water extracted from the laundry in the drum 3 is scattered away toward the outer tub 2 through the water communication perforations 4.

The rotation shaft 7 is rotatably supported by a bearing 8 fixed to the outer tub 2, and a main pulley 9 is attached to a rear end of the rotation shaft 7. A motor 10 is disposed on the bottom, and a motor pulley 11 is attached to a rotation shaft of the motor 10. A torque of the motor pulley 11 is transmitted to the main pulley 9 via a V-belt 12. A water supply pipe (not shown) extending to an external water supply is connected to a water supply connector 13 provided in a rear wall of the housing 1. Water supplied through the water supply pipe flows through a water supply valve 14 and is discharged into the outer tub 2 from a water supply port 15 provided in a rear wall of the outer tub 2. Water retained in the outer tub 2 is drained to the outside through a water drain port 17 which is opened and closed by a water drain valve 16.

A rotation sensor 18 includes a light emitter and a light receiver provided on a rear surface of the outer tub 2 and on the inner side of the rear wall of the housing 1, respectively, with the main pulley 9 interposed therebetween. An opening is formed in a peripheral portion of a ring member of the main pulley 9 disposed between the light emitter and the light receiver, and light emitted from the light emitter passes through the opening to reach the light receiver once in each turn of the drum 3. On the basis of this light reception signal, the light receiver generates a rotation pulse signal in synchronization with each turn of the drum 3. The rotation sensor 18 is not limited to the aforesaid construction, but may be adapted to detect the rotational position of the drum 3 by means of a magnetic sensor.

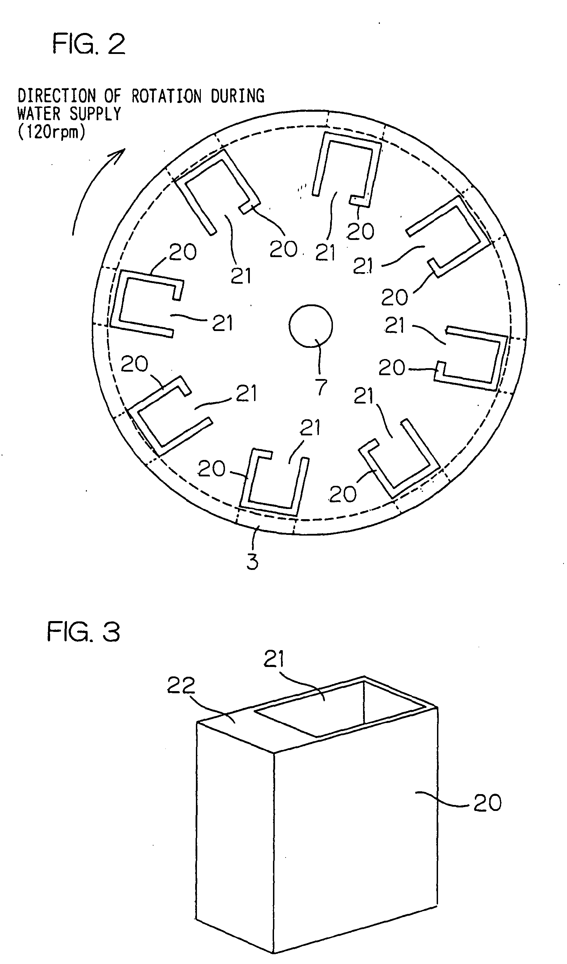

Fig. 2 is a sectional view taken along a line A-A' in Fig. 1. Eight water tanks 20 (liquid chambers for compensation for an eccentric load) are radially provided in an about 45-degree spaced relation on the back side of the drum 3 around the rotation shaft 7. Fig. 3 is a perspective view illustrating the external appearance of the water tank 20. The water tanks 20 are of a rectangular box shape, and have the same volume. The water tanks 20 each have an opening 21 (liquid discharge port) occupying about 2/3 of one face thereof and a closed portion 22 occupying the remaining 1/3 of the face. As shown in Fig. 2, the closed portions 22 of the water tanks 20 are each located on the forward side with respect to a rotation direction in which the drum is rotated in the dehydration process. The water tanks 20 are attached to the drum 3 with the openings 21 thereof facing toward the rotation shaft 7. Thus, the openings 21 serving as the water discharge ports are located radially inwardly of the drum 3.

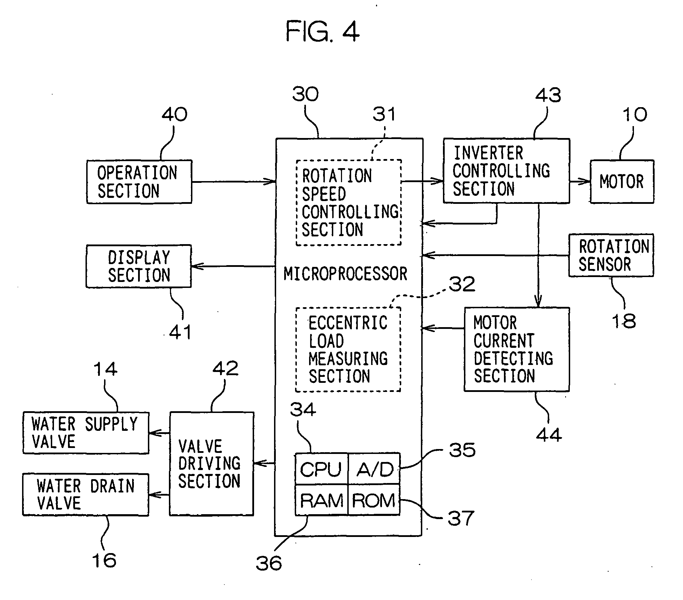

Fig. 4 is a block diagram illustrating the electrical construction of the drum-type washing machine. A microprocessor 30 which performs a comprehensive control operation includes a CPU 34, an A/D convertor 35, a RAM 36, a ROM 37 and the like. Operation programs for performing respective processes for washing are preliminarily stored in the ROM 37. The microprocessor 30 is connected to an operation section 40, a display section 41, a valve driving section 42, an inverter controlling section 43, a motor current detecting section 44 and the like. The operation section 40 includes an operation panel provided on a front face of the housing 1, and is operated by a user to apply an input signal to the microprocessor 30 according to the operation. The display section 41 includes a display panel provided on the front face of the housing 1, and is adapted to display information for the operation and information related to the processes.

The microprocessor 30 includes a rotation speed controlling section 31 and an eccentric load measuring section 32 as functional sections. The rotation speed controlling section 31 outputs a rotation speed command signal to the inverter controlling section 43. The inverter controlling section 43 , converts the command signal into a PWM signal, and applies a driving voltage to the motor 10 in accordance with the PWM signal. Thus, the motor 10 is rotated at a desired rotation speed, which is reduced at a predetermined reduction ratio, and the drum 3 is rotated at the reduced rotation speed. The motor current detecting section 44 detects a torque current component of a driving electric current applied to the motor 10 from the inverter controlling section 43.

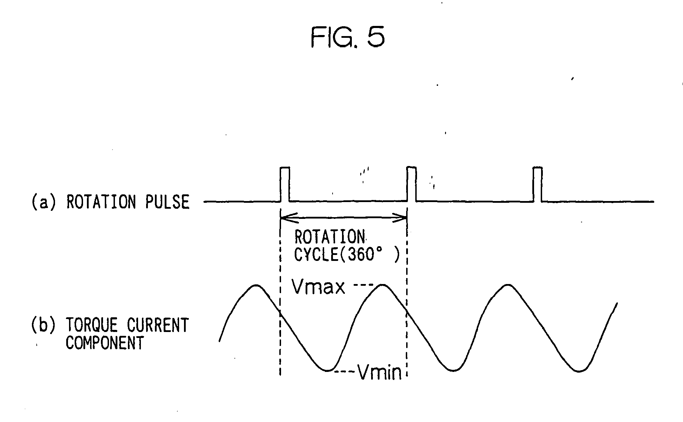

When the laundry is unevenly distributed on the inner circumferential surface of the drum 3, a load torque is fluctuated in each turn of the drum 3 and, therefore, the torque current component is fluctuated according to an eccentric load generated due to the uneven distribution of the laundry. Figs. 5(a), 5(b) are exemplary waveform diagrams respectively illustrating the rotation pulse signal provided by the rotation sensor 18 and the fluctuation of the torque current component caused due to the eccentric load. A maximum peak $V_{max}$ of the torque current component appears when the load torque is maximized in each turn of the drum 3. The load torque is maximized when the laundry causing the eccentric load is lifted against the gravity within the drum 3. Therefore, the maximum peak $V_{max}$ generally appears when the eccentric load is present within a angular range from a position about 90 degrees before the uppermost position to the uppermost position in the drum 3. The position of the eccentric load on the inner circumferential surface of the drum 3 can be expressed by a phase angle at which the maximum peak $V_{max}$ (or minimum peak $V_{min}$) appears in a range of 0 to 360 degrees with respect to a reference zero point at which the rotation pulse signal rises.

On the other hand, the amplitude of the fluctuation of the torque current component, i.e., a difference between the maximum peak value and the minimum peak value ($V_{max}-V_{min}$), reflects the magnitude of the eccentric load (eccentricity). Therefore, a relationship between the eccentricity and the fluctuation amplitude of the torque current component is preliminarily determined, and a reference value to be employed for judgment of the eccentricity to be described later is preliminarily defined so that the judgment on the eccentricity can be based on the judgment on the fluctuation amplitude. More specifically, the eccentric load measuring section 32 detects the maximum peak $V_{max}$ and the minimum peak $V_{min}$ in each turn of the drum 3 upon reception of a waveform as shown in Fig. 5(b) from the motor current detecting section 44 to determine the fluctuation amplitude on the basis of the difference between these peak values, and compares the fluctuation amplitude with the judgment reference value to judge whether the eccentricity is not greater than an allowable level.

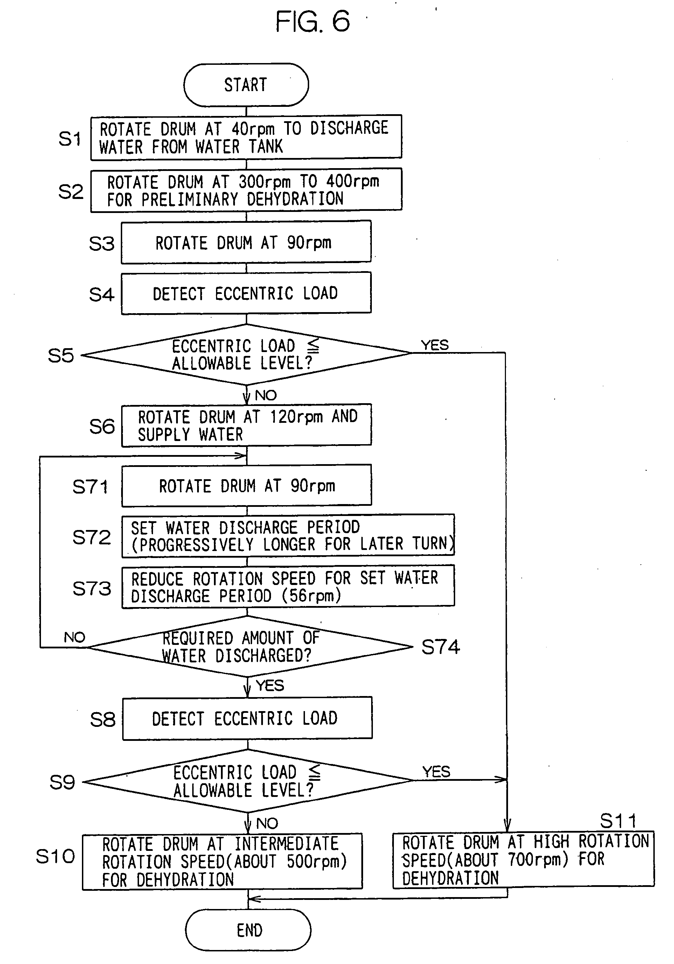

A feature of the drum-type washing machine according to this embodiment is an operation to be performed in a dehydration process after a washing process or a rinsing process, more specifically, a method for correction of unbalance occurring due to the uneven distribution of the laundry at the start of the dehydration process. The operation to be performed in the dehydration process will next be described in detail. Fig. 6 is a flow chart illustrating a control operation to be performed in the dehydration process.

When the dehydration process is started, the rotation speed controlling section 31 controls the rotation of the motor 10 via the inverter controlling section 43 to rotate the drum 3 at a rotation speed of about 40 rpm (Step S1). At the start of the dehydration process, there is a possibility that the water supplied into the outer tub 2 in the preceding washing or rinsing process remains in the water tanks 20. At the aforesaid rotation speed, a centrifugal force acting on the water in the water tanks 20 is smaller than the gravity. Accordingly, the water retained in the water tanks 20 flows out of the openings 21 by the gravity when the water tanks 20 are located at upper rotational positions. Therefore, the respective water tanks 20 are emptied by temporarily rotating the drum 3 at the aforesaid rotation speed.

Subsequently, the rotation speed controlling section 31 controls the rotation of the motor 10 to rotate the drum 3 at a rotation speed of about 300 rpm to about 400 rpm (Step S2). At this rotation speed, the water can moderately be extracted from the laundry by a centrifugal force in the drum 3, and vibrations of the drum 3 and the outer tub 2 can be suppressed to an allowable level even if the eccentric load occurring due to the uneven distribution of the laundry is relatively great. Thus, the laundry is preliminarily dehydrated. By thus preliminarily dehydrating the laundry to some extent, the increase in the eccentric load and the positional change of the eccentric load occurring due to variations in dehydration rate can be suppressed when high speed centrifugal dehydration is later performed.

Next, the rotation speed controlling section 31 reduces the rotation speed of the drum 3 to about 90 rpm, and keeps this rotation speed (Step S3) . At this rotation speed, the centrifugal force acting on the laundry is still greater than the gravity, so that the laundry adheres onto the inner circumferential surface of the drum 3 and rotate together with the drum 3. In this state, the eccentric load measuring section 32 detects a currently occurring eccentric load, i.e., the eccentricity and the position of the eccentric load on the inner circumferential surface of the drum 3, on the basis of the torque current component detected by the motor current detecting section 44 as described above (Step S4). Then, it is judged whether the detected eccentricity is not greater than an allowable level (Step S5). The allowable level is preliminarily set depending on a vibration level (amplitude) allowable during the high speed rotation in the dehydration process to be described later.

If the eccentricity is not greater than the allowable level in Step S5, there is no need to perform a balancing operation. Therefore, the rotation speed controlling section 31 increases the rotation speed of the drum 3 to about 700 rpm, and keeps this rotation speed for the dehydration (Step S11).

If the eccentricity is greater than the allowable level in Step S5, the following balancing operation is performed. First, the rotation speed controlling section 31 increases the rotation speed of the drum 3 to about 120 rpm, and opens the water supply valve 14 via the valve driving section 42 (Step S6). Then, the water introduced through the water supply pipe is discharged from the water supply port 15. Since the water tanks 20 are rotated together with the drum 3 in front of the water supply port 15, the water discharged from the water supply port 15 flows into the water tanks 20 ' through the openings 21 of the water tanks 20 when the water tanks each passes through a lower rotational position. Since a centrifugal force acting on the water in the water tanks 20 is greater than the gravity, the water is outwardly biased and retained within the water tanks 20 without spilling from the openings 21.

By keeping this state for a predetermined period, the water tanks 20 are each filled up with the water. Since the water tanks 20 are arranged radially around the rotation shaft 7, the water tanks 20 filled up with the water produce no eccentric load. On the other hand, the eccentric load occurring due to the uneven distribution of the laundry is not changed because the laundry is pressed against the inner circumferential surface of the drum 3 by the centrifugal force.

Therefore, the eccentric load exerted on the drum 3 is not changed as compared with that before the water filling.

Thereafter, the rotation of the drum 3 is controlled on the basis of the position of the previously detected eccentric load so that the water is discharged from water tanks 20 located at the same rotational position as the position of the eccentric load or at the closest rotational position to the position of the eccentric load. That is, when the rotation speed of the drum 3 is temporarily reduced from the level at which the centrifugal force acting on the water in the water tanks 20 is greater than the gravity to the level at which the centrifugal force is smaller than the gravity, the water falls out of water tanks 20 located at upper rotational positions, so that the amount of the water therein is reduced.

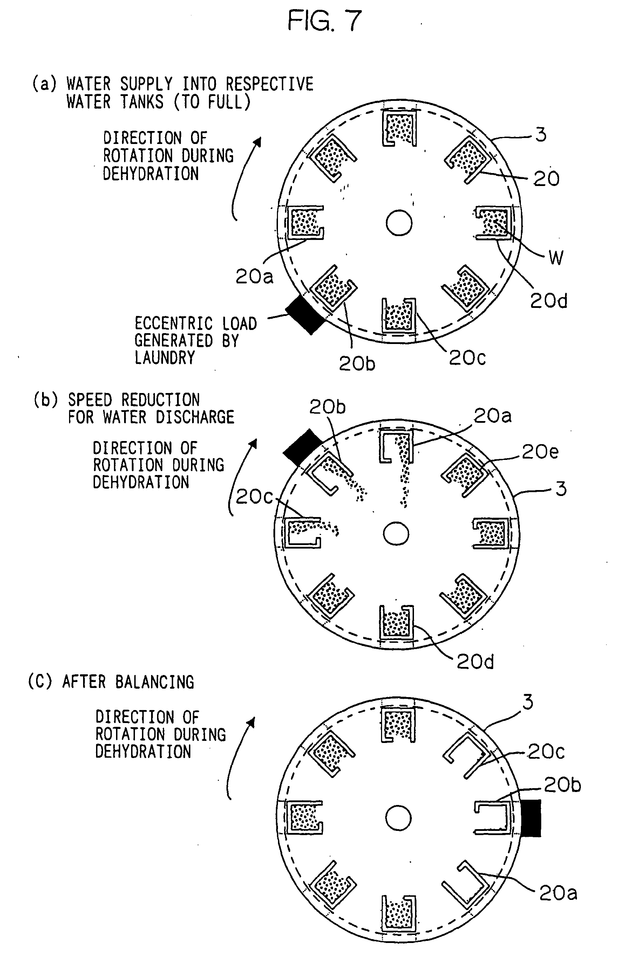

Figs. 7(a)-(c) are schematic diagrams illustrating the states of the water in the water tanks 20 during the rotation. When the drum 3 is rotated at 90 rpm, the state of the water is as shown in Fig. 7(a). At this rotation speed, the centrifugal force acting on the water retained in the respective water tanks 20 is sufficiently great, so that the water is discharged from none of the water tanks 20.

When the rotation speed is temporarily reduced in this state as described above, an inertial force acts on the water retained in the water tanks 20. Since the gravity also acts on the water in the rotating water tanks 20, the water falls out of water tanks 20b, 20c moving up to an upper rotational position and a water tank 20a located at the uppermost position as shown in Fig. 7(b). On the other hand, the water is kept retained in water tanks (such as denoted by 20e) moving down to a lower rotational position without falling therefrom.

When the rotation speed is abruptly reduced, the water falling out of the water tanks 20 rotating upward is scattered down. Therefore, there is a low possibility that the falling water enters water tanks passing therebelow and, even if the falling water enters the water tanks, the amount thereof is negligible.

In this balancing operation, it is necessary to cause only the water to fall from the water tanks and prevent the laundry from moving within the drum 3. In the washing machine according to this embodiment, the water tanks 20 are provided closer to the center apart from the inner circumferential surface of the drum 3, so that a greater centrifugal force acts on the laundry adhering onto the inner circumferential surface of the drum 3 than on the water in the water tanks 20 when the drum 3 is rotated at a certain rotation speed. In general, the water contained in the wet laundry increases the adherence of the laundry to the inner circumferential surface of the drum 3, so that the laundry is less liable to fall than expected from a theoretical relationship between the centrifugal force and the gravity. Therefore, the rotation speed is properly set at a level at which the centrifugal force is virtually balanced with the gravity, whereby only the water is caused to fall but the laundry is prevented from falling.

More specifically, the rotation speed controlling section 31 rotates the drum 3 at a rotation speed, e.g., about 90 rpm, at which the laundry is lightly pressed against the inner circumferential surface of the drum 3 by the centrifugal force (Step S71). Then, the fluctuation of the torque current component as shown in Fig. 5(b) is monitored and, when the maximum peak $V_{max}$ appears, the position of the eccentric load is detected. At a proper time point when the eccentric load moves upward (e.g., in an angular range from a position 90 degrees before the uppermost position to the uppermost position) after the eccentric load passes through the lowermost position of the drum 3, the rotation speed is abruptly reduced to about 56 rpm and immediately restored to the previous level (Step S73). Thus, the water falls out of the water tanks located at the same position as the position of the eccentric load or adjacent the position of the eccentric load as shown in Figs. 7(b) and 7(c), so that the weight of the water is correspondingly reduced. If the weight reduction matches with the eccentric load occurring due to the uneven distribution of the laundry, the eccentric load exerted on the entire drum 3 is reduced.

In this embodiment, the discharge of the water from the water tanks 20 by the short-period speed reduction is repeated during plural turns of the drum. In general, it is difficult to discharge a required amount of water from the water tanks 20 located adjacent the position of the eccentric load by the short-period speed reduction caused only once in one turn of the drum 3. Therefore, the rotation speed of the drum 3 is reduced when the eccentric load generated by the laundry is present within the angular range from the position 90 degrees before the uppermost position to the uppermost position in each of the plural turns of the drum 3 (Step S73).

At this time, a duration of the water discharge effected by the reduction of the rotation speed of the drum 3 (water discharge period) is variably set for each turn of the drum (Step S72). More specifically, when the first water discharge is effected during the rotation of the drum 3 at 90 rpm, a water discharge period is set at T1 (e.g., 0.2 sec) (Step S72), and the rotation speed of the drum 3 is reduced for the water discharge period T1 (Step S73). Then, a water discharge period for the second turn of the drum 3 after the first water discharge is set at T2 (e.g., 0.3 sec) (Step S72). The water discharge period T2 is set longer than the first water discharge period T1. Further, a water discharge period for the third water discharge is set at T3 (e.g., 0.4 sec) which is longer than the second water discharge period T2 (Step S72). Plural turns are given to the drum 3 in the aforesaid manner until the required amount of water is discharged (Step S74). Thus, the water is intermittently discharged from the water tanks 20 during the plural turns of the drum. At this time, the water discharge periods for the respective turns of the drum are set so that the water discharge period for the subsequent turn is longer than the water discharge period for the precedent turn.

The amount of the water required to be discharged from the water tanks 20 located adjacent the position of the eccentric load is determined on the basis of the magnitude of the eccentric load. Since the water discharge amount can be adjusted by the number of times of the speed reduction of the drum 3, the judgment in Step S74 may be achieved by judging whether the speed reduction of the drum 3 is effected a number of times which depends on the magnitude of the eccentric load.

After the balancing operation described above, the eccentric load is detected again in the same manner as in Steps S4, S5, and it is judged whether the eccentricity is not greater than the allowable level (Steps S8, S9). If the eccentricity is not greater than the allowable level after the balancing operation, the rotation speed controlling section 31 increases the rotation speed of the drum 3 to about 700 rpm, and keeps this rotation speed for the dehydration (Step S11).

If the eccentricity is greater than the allowable level in Step S9, the eccentric load is not yet canceled by the balancing operation, so that the rotation speed of the drum 3 is increased to a level (about 500 rpm) which does not result in abnormally great vibrations even in the presence of the eccentric load for the dehydration. After a lapse of a predetermined dehydration period in Step S10 or S11, the rotation of the drum 3 is stopped to end the dehydration process.

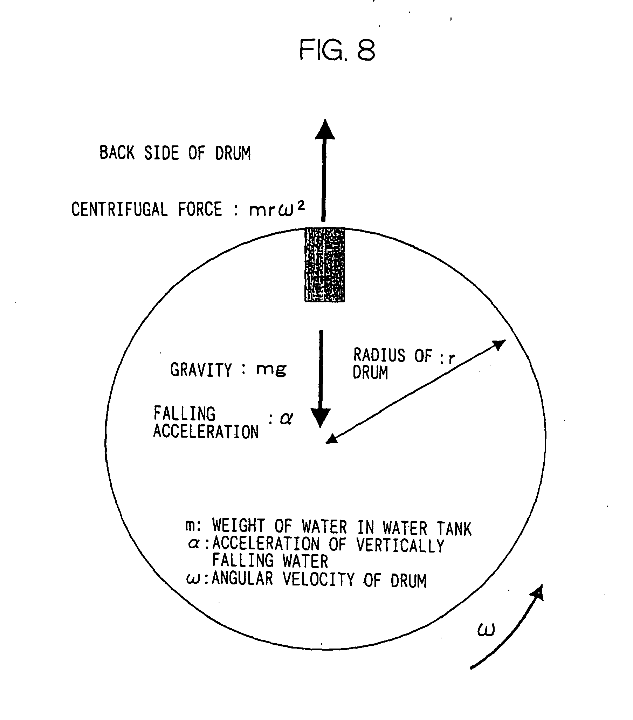

Fig. 8 is a schematic diagram for explaining how forces act on the water retained in the water tank 20 located at the uppermost position. Where the drum 3 which has a radius r is rotated at an angular velocity $\omega$, the following dynamic equation (1) for water W having a mass m is established.

$$m\alpha = mg - mr\omega^2 \quad \ldots\ldots(1)$$

wherein g is the acceleration of the gravity.

Therefore, a falling acceleration $\alpha$ acting on the water retained in the water tank 20 is represented by the following equation (2):

$$\alpha = g - r\omega^2 \quad \ldots\ldots(2)$$

which is integrated with time t, arid the vertically falling velocity v of the water retained in the water tank 20 is represented by the following equation (3):

$$v = \alpha t = (g - r\omega^2)t \quad \ldots\ldots(3)$$

which is further integrated with time t, the vertical position y of the water in the water tank 20 with respect to the uppermost position defined as an origin is represented by the following equation (4):

$$y = (1/2)\alpha t^2 = (1/2)(g - r\omega^2)t^2 \quad \ldots\ldots(4)$$

The equation (4) indicates that the displacement of the water in the water tank 20 increases with time t.

Where the water tank 20 is filled up to the opening 21 with the water W, the water discharge from the water tank 20 is achieved by slight displacement of the water W within the water tank 20. Where a small amount of the water remains in the water tank 20, on the contrary, the water W needs to be displaced to a relatively great extent in the water tank 20 until a water surface located radially closer to the circumference of the drum 3 reaches the opening 21.

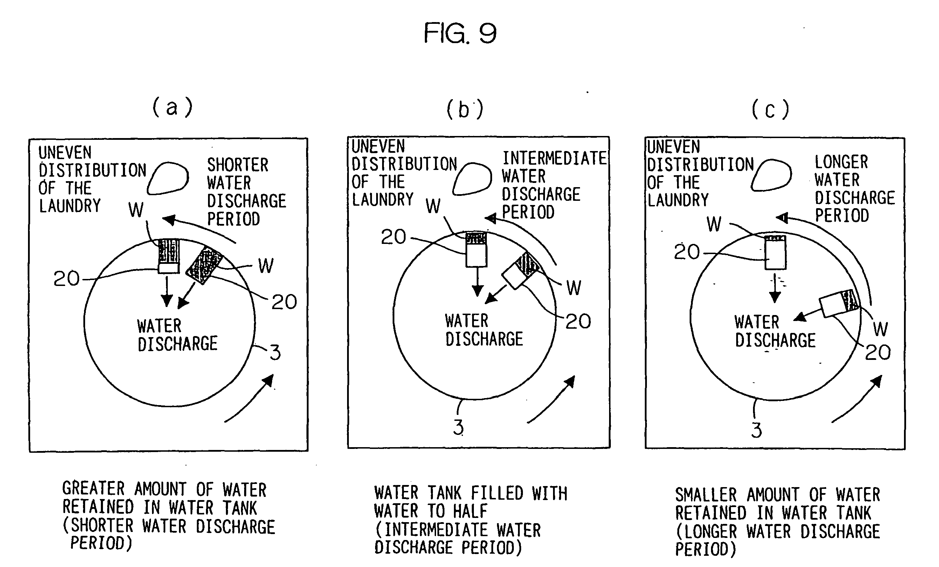

In this embodiment, as shown in Figs. 9(a)-(c), the water discharge period T1 is set relatively short for the first water discharge when the amount of the water remaining in the water tank 20 is relatively great (see Fig. 9(a)). After the amount of the remaining water is reduced by the first water discharge, the water discharge period T2 for the second water discharge is set longer than the water discharge period T1 by starting the reduction of the rotation speed earlier (see Fig. 9(b)). The amount of the water remaining in the water tank 20 is further reduced by the first water discharge and the second water discharge and, therefore, the water discharge period T3 for the third water discharge is set further longer by starting the reduction of the rotation speed further earlier (see Fig. 9(c)).

Thus, the water discharge periods are properly set depending on the amount of the water remaining in the water tanks 20, so that the required amount of the water can assuredly be discharged from the water tanks 20 located at the position of the eccentric load. Therefore, the eccentric load occurring due to the uneven distribution of the laundry can assuredly be compensated for, so that vibrations and noises of the drum 3 can be suppressed when the drum 3 is rotated at a higher rotation speed for the dehydration.

[Second Embodiment]

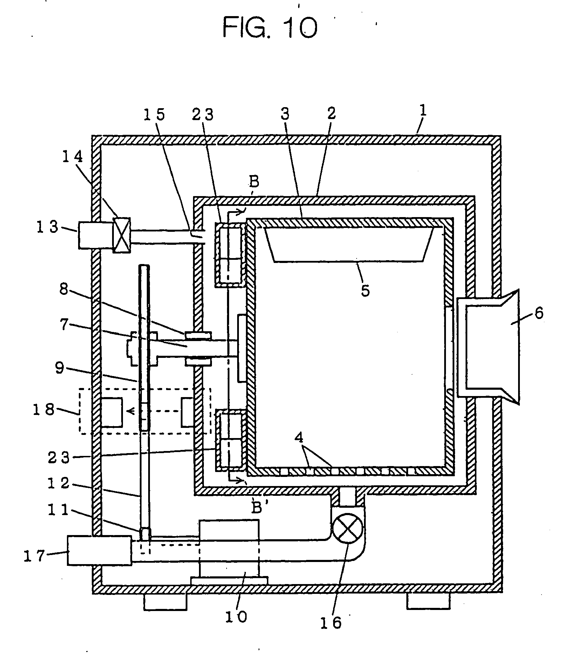

A drum-type washing machine according to a second embodiment of the present invention will next be described with reference to Figs. 10 to 12.

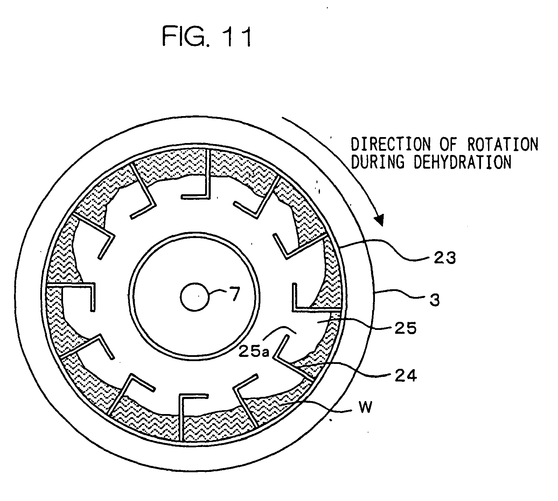

Fig. 10 is a vertical sectional view illustrating the overall construction of the drum-type washing machine according to the second embodiment. Components having the same construction as those of the washing machine of the first embodiment are denoted by the same reference numerals, and no explanation will be given thereto. In the washing machine, a balancer 23 which is a hollow annular component containing a predetermined amount of water (or any other liquid, such as a saline solution or a potassium chloride solution, preferably having a higher density) is provided on the back side of the drum 3. Fig. 11 is a sectional view taken along a line B-B' in Fig. 10. In the balancer 23, L-shaped partition walls 24 are provided at predetermined angular intervals as radially projecting from the circumference of the balancer. The partition walls 24 prevent free movement of the water contained in the balancer. That is, when the drum 3 is rotated at a sufficiently high rotation speed, water in chambers 25 (liquid chambers) defined between respective adjacent pairs of partition walls 24 is biased toward the circumference, and is prevented from moving to the other chambers 25.

Openings 25a (liquid discharge ports) located radially inwardly of the drum 3 are defined between the respective L-shaped partition walls 24. When the rotation speed of the drum 3 is reduced, the water W flows out of or into the chambers 25 through the openings 25a so as to move between the chambers 25.

Radially straight partition walls may be provided instead of the L-shaped partition walls.

In the washing machine of the second embodiment the total amount of the water retained in the balancer 23 is not changed, but the amounts of water retained in the respective chambers 25 within the balancer 23 are changed for the balancing operation. The washing machine has the same electrical construction as in the first embodiment, but only a control program is slightly different as will be described later.

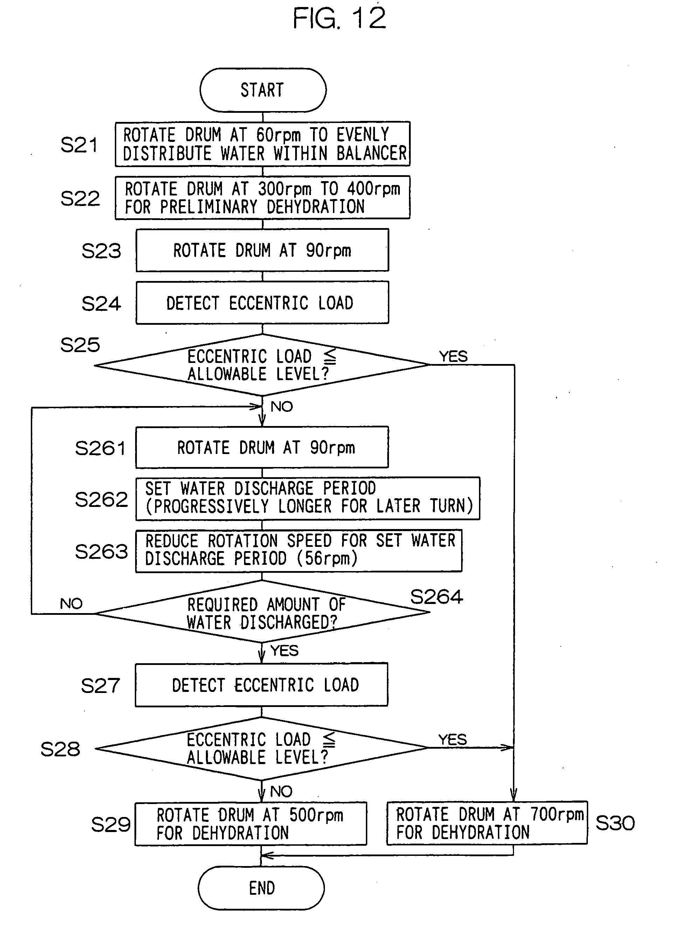

Fig. 12 is a flow chart illustrating a control operation to be performed in the dehydration process. With reference to this flow chart, an explanation will be given to a difference from the control operation in the first embodiment.

When the dehydration process is started, the rotation speed controlling section 31 controls the rotation of the motor 10 via the inverter controlling section 43 to rotate the drum 3 at a rotation speed of about 60 rpm (Step S21). At this rotation speed, a centrifugal force acting on the water in the balancer 23 is virtually balanced with the gravity. When the drum 3 is rotated at this rotation speed, portions of the water present on the outer peripheral side in the respective chambers 25 are kept retained in the chambers 25 within the balancer 23 by the centrifugal force, and portions of the water present on the inner peripheral side in the respective chambers 25 falls by the gravity to move to the other chambers 25. Therefore, when the drum 3 is temporarily rotated at the aforesaid rotation speed, the amounts of the water present in the respective chambers 25 are equalized. With the water amounts being thus equalized, no eccentric load occurs in the balancer 23, so that only an eccentric load generated by the uneven distribution of the laundry is exerted on the drum 3.

Subsequently, the preliminary dehydration of the laundry, the detection of the eccentric load and the judgment on the eccentricity are carried out in Steps S22 to S25 which are equivalent to Steps S2 to S5. If the eccentricity is not greater than the allowable level, the process goes to Step S30, whereby the rotation speed controlling section 31 increases the rotation speed of the drum 3 up to about 700 rpm and keeps this rotation speed for the dehydration (high speed dehydration operation).

On the other hand, if the eccentricity is greater than the allowable level in Step S25, the balancing operation is performer through a control operation in Steps S261 to S264 which are equivalent to Steps S71 to S74. That is, the drum 3 is rotated at about 90 rpm (Step S261), and the rotation speed of the drum 3 is reduced to 56 rpm for a short period at a time point which depends on the position of the eccentric load (Step S263). Then the water falls out of chambers 25 moving to an upper position of the drum 3, and most of the water flows into other chambers 25 located at a diametrically opposite position with respect to the rotation shaft 7. As a result, the amounts of the water in the chambers 25 located adjacent the position of the eccentric load occurring due to the uneven distribution of the laundry are reduced, and the amounts of the water in the chambers 25 located at and adjacent the diametrically opposite position with respect to the rotation shaft 7 are increased. Thus, the eccentric load exerted on the entire drum 3 is reduced.

In this embodiment, the water discharge from the chambers 25 is effected by intermittently reducing the rotation speed of the drum 3 during plural turns of the drum 3 as in the first embodiment. In this case, a duration of the reduction of the rotation speed of the drum 3 for the first water discharge from the chambers 25, i.e., a water discharge period T1, is set relatively short (Step S262). Then, a water discharge period T2 for the second water discharge following the first water discharge is set longer than the first water discharge period T1 (Step S262). Similarly, a water discharge period for the subsequent turn of the drum 3 is set longer than the water discharge period for the precedent turn of the drum 3 so that the water can assuredly be discharged from the chambers 25 located at the position of the eccentric load.

As in the first embodiment, the speed reduction of the drum 3 is repeated a number of times which depends on the amount of water required to be discharged (Step S264).

[Third Embodiment]

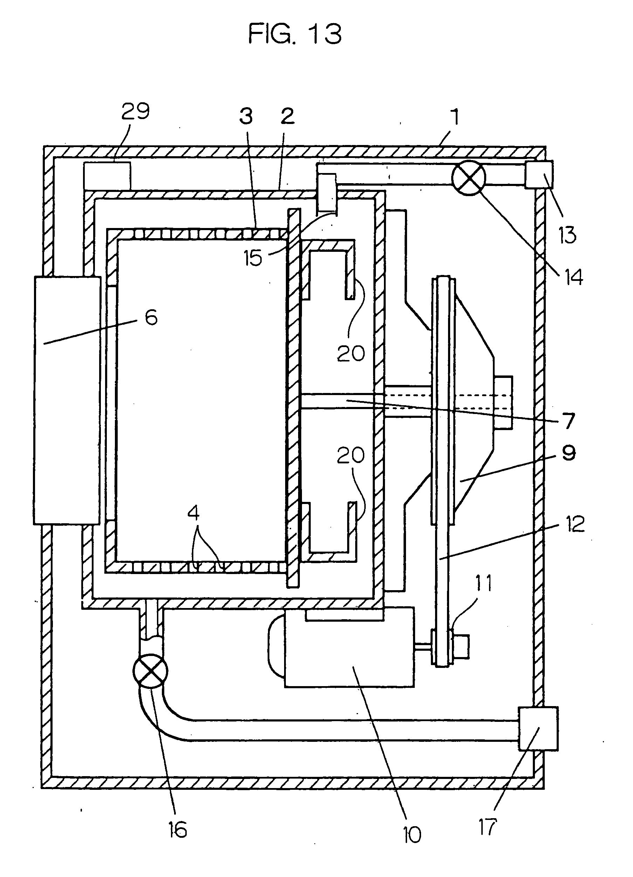

A drum-type washing machine according to a third embodiment of the present invention will be described with reference to Figs. 13 to 18.

Fig. 13 is a vertical sectional view illustrating the overall construction of the drum-type washing machine according to the third embodiment. Components having the same construction as those of the washing machines of the first and second embodiments are denoted by the same reference characters, and no explanation will be given thereto.

This washing machine obviates the rotation sensor 18 provided in the washing machines of the first and second embodiments. Instead, an acceleration sensor 29 is provided on a front upper portion of the outer tub 2. The acceleration sensor 29 mainly serves to detect a vertical acceleration of the outer tub 2. The magnitude and position of an eccentric load exerted on the drum 3 are determined on the basis of the result of the detection by the acceleration sensor 29.

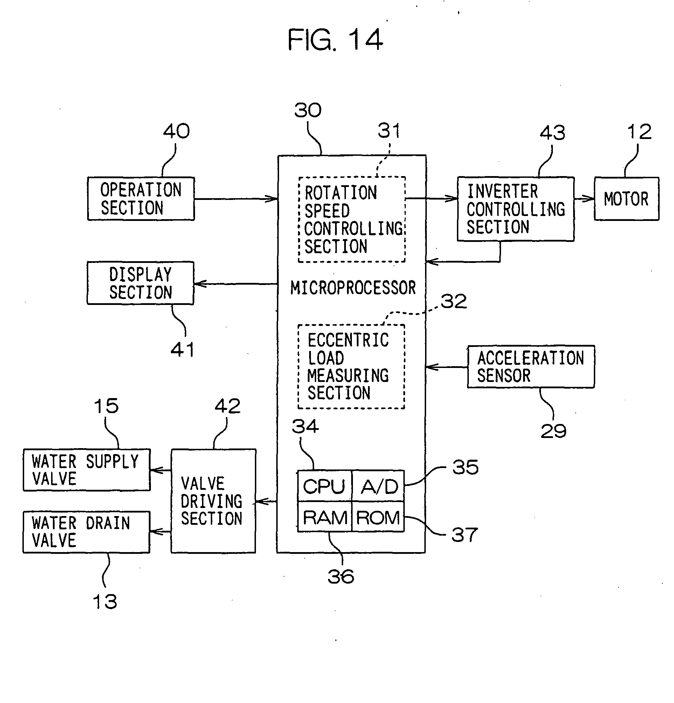

Fig. 14 is a block diagram illustrating the electrical construction of the drum-type washing machine. The electrical construction is substantially the same as that of the drum-type washing machine according to the first embodiment, but the following points are different. That is, the rotation sensor 18 and the motor current detecting section 44 provided in the first embodiment are obviated and, instead, the acceleration sensor 29 is provided. The acceleration sensor 29 is connected to the microprocessor 30 independently from an output of the inverter controlling section 43.

When the eccentric load is exerted on the drum 3, an acceleration component detected by the acceleration sensor 29 is fluctuated according to the eccentric load in each turn of the drum 3. Therefore, the magnitude of the eccentric load and the position (angular position) of the eccentric load can be detected on the basis of an output of the acceleration sensor 29.

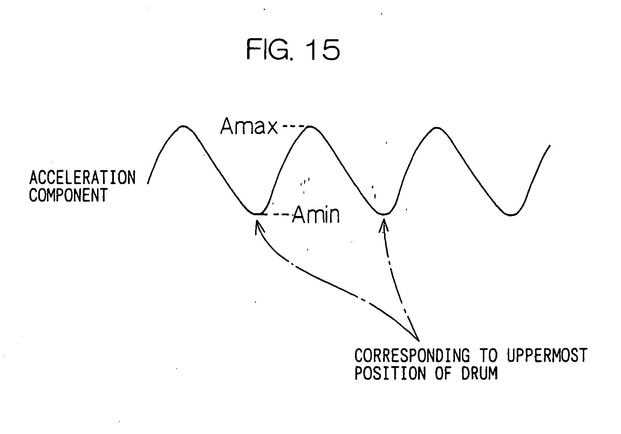

Fig. 15 is a waveform diagram illustrating an exemplary fluctuation of the acceleration component occurring due to the eccentric load. The minimum peak $A_{min}$ of the acceleration component appears when the eccentric load exerted on the drum 3 is present at the uppermost position. The position of the eccentric load can be detected by utilizing this characteristic.

On the other hand, the amplitude of the fluctuation of the acceleration component, i.e., a difference between the maximum peak and the minimum peak ($A_{max}$-$A_{min}$) reflects the magnitude of the eccentric load.

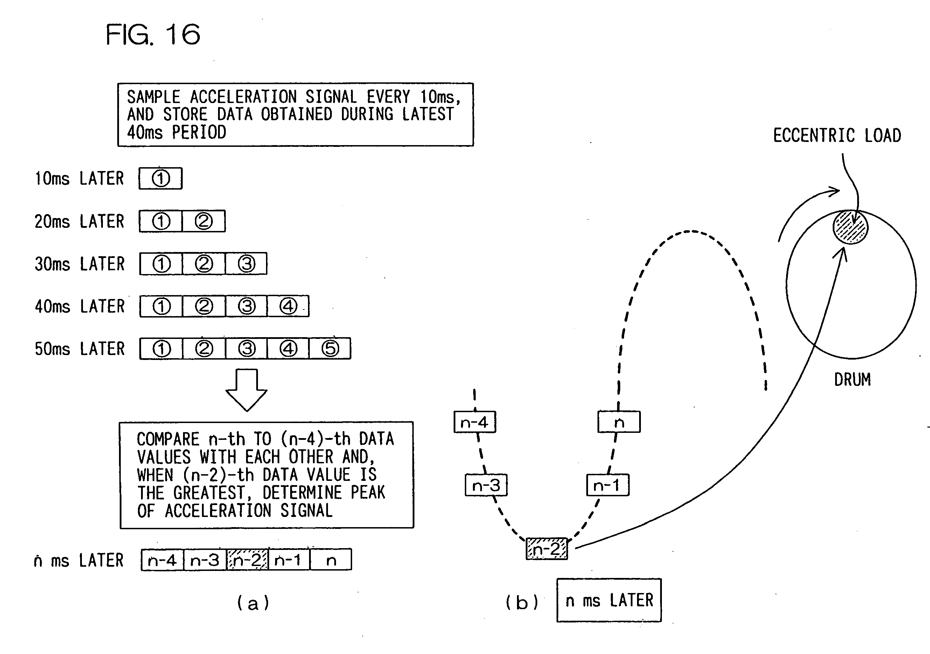

Figs. 16(a), 16(b) are diagrams for explaining the principle of how the microprocessor 30 determines the eccentric load on the basis of the output of the acceleration sensor 29.

When the eccentric load is present at the uppermost position of the drum 3 in each turn of the drum 3, the acceleration is minimized. Therefore, a time point at which the eccentric load is present at the uppermost position can be determined by detecting a time point at which the acceleration is minimized. Output values from the acceleration sensor 29 are sampled at a predetermined time interval, and stored in the RAM 36 in the microprocessor 30. The sampling interval is herein 10 ms. The RAM 36 has five storage areas, i.e., first to fifth storage areas, for storing therein sampled acceleration values. Fig. 16(a) shows storage states observed at respective time points, and the first storage area is shown on the rightmost side.

When the latest sampled value is to be stored, a value previously stored in an n-th storage area ($1 \leqq n \leqq 4$) is shifted to an (n+1)-th storage area, and the latest sampled value is stored in the first storage area. A value previously stored in the fifth storage area is discarded. That is, values sampled in the first to fifth sampling operations are successively filled in the first to fifth storage areas and, thereafter, five values sampled in the latest and four preceding sampling operations are constantly stored in the RAM 36 (See Fig. 16(a)).

Whenever a sampled value is newly stored, the microprocessor 30 compares the values stored in the first to fifth storage areas with each other. When a value stored in the third storage area, i.e., a value sampled in the (n-2)-th sampling operation, is the smallest among these values, this value is judged to correspond to the minimum acceleration peak (see Fig. 16(b)). The angular position of the eccentric load can thus be detected, because the minimum acceleration peak corresponds to the maximum peak of the eccentric load at the angular position.

Although the minimum peak is determined by utilizing five sampled values in this embodiment, the RAM 36 may be adapted to store three sampled values in three storage areas thereof and the minimum peak of the acceleration may be determined by detecting a time point at which a value stored in a second storage area is minimized. However, five or more sampled values are preferably employed for the determination of the minimum peak, as in this embodiment, for prevention of erroneous determination due to noises

On the other hand, the amplitude of the fluctuation of the acceleration, i.e., a difference between the maximum peak value and the minimum peak value, reflects the magnitude of the eccentric load. By preliminarily determining a relationship between the magnitude of the eccentric load and the fluctuation amplitude of the acceleration, therefore, the magnitude of the eccentric load can be determined on the basis of the fluctuation amplitude of the acceleration.

For the determination of the eccentric load, measurement values of the acceleration are employed in this embodiment, but measurement values of the torque current of the motor 12 or measurement values of a floor load may be employed. The aforesaid method is also applicable to this case.

In any case, the eccentric load exerted on the drum 3 can be detected on the basis of independent data, i.e., the acceleration of a support member of the drum 3 such as the outer tub 2. That is, there is no need to detect the angular position of the eccentric load with respect to a reference angular position of the drum 3, thereby leading to simplification of the construction of the machine and cost reduction of the machine.

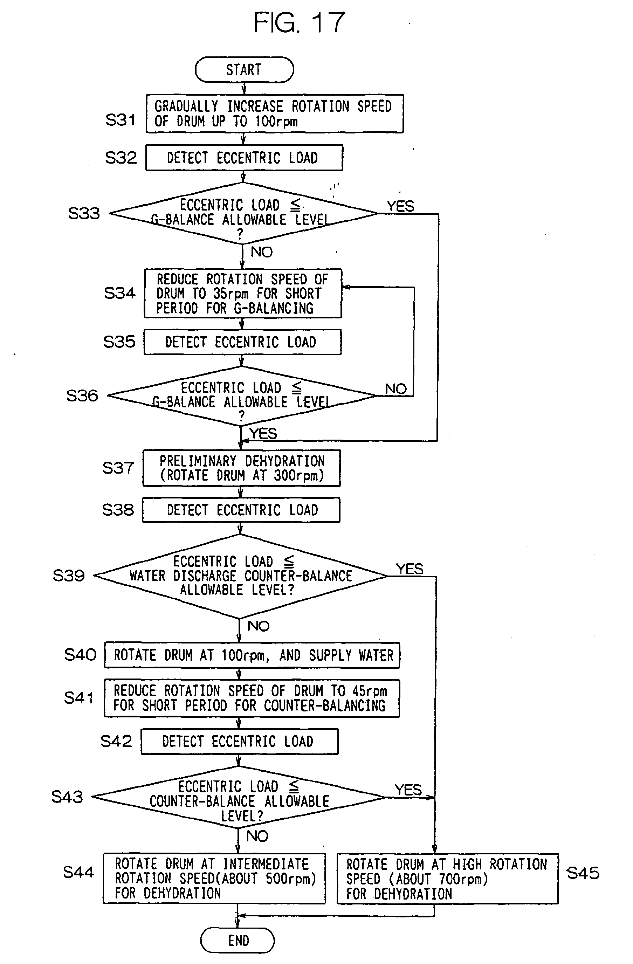

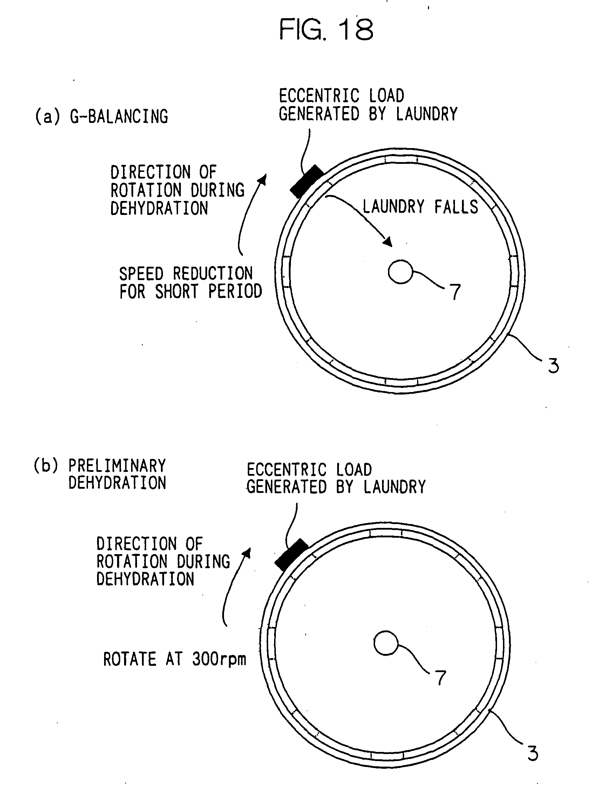

Fig. 17 is a flow chart illustrating a control operation to be performed by the microprocessor 30 in the dehydration process. Figs. 18(a), 18(b) are schematic diagrams illustrating the states of the drum 3 during the rotation of the drum.

When the dehydration process is started, the drain valve 16 is opened, and the rotation speed of the drum 3 is gradually increased up to about 100 rpm (Step S31). This rotation speed is slightly greater than a rotation speed at which the centrifugal force acting on the laundry is balanced with the gravity. Therefore, the eccentric load can thereafter be detected at a relatively low rotation speed which is less liable to cause vibrations (Step S32). By gradually increasing the rotation speed, the laundry which may be clustered on one side in the drum 3 after the rinsing process can be dispersed and pressed against the inner circumferential surface of the drum 3. When the rotation speed reaches 100 rpm, the laundry adheres onto the inner circumferential surface in a somewhat dispersed state.

In this state, the magnitude and position of the eccentric load exerted on the drum 3 are detected on the basis of the acceleration component detected by the acceleration sensor 29 (Step S32). Then, the detected magnitude of the eccentric load is compared with a G-balance allowable level as a second reference value to judge whether the magnitude of the eccentric load is not greater than the G-balance allowable level (Step S33).

If the magnitude of the eccentric load exerted on the drum 3 is not greater than the G-balance allowable level, there is no need to perform a G-balancing operation. Therefore, the rotation speed of the drum which has been rotated at about 100 rpm is increased to about 300 rpm (Step S37, see Fig. 18 (b)). At this rotation speed, the water contained in the laundry within the drum 3 is moderately extracted to be scattered away by the centrifugal force, and yet the vibrations of the drum 3 and the outer tub 2 are suppressed to an allowable level even with the eccentric load occurring due to the uneven distribution of the laundry. That is, the laundry is preliminarily dehydrated. By dehydrating the laundry to some extend in this preliminary dehydration, an increase in the eccentric load can be suppressed which may otherwise occur due to a difference in the dehydration rate of the laundry when the drum 3 is rotated at a higher rotation speed for the dehydration. In addition, the laundry firmly adheres onto the inner circumferential surface of the drum 3, so that the laundry is prevented from being displaced by the gravity when a counter-balancing operation is thereafter performed.

On the other hand, if the magnitude of the eccentric load exerted on the drum 3 is greater than the G-balance allowable level, the following G-balancing operation is performed. More specifically, the rotation speed of the drum 3 which has been rotated at about 100 rpm is reduced to about 35 rpm for a short period at a time point which depends on the position of the eccentric load (Step S34, see Fig. 18 (a)). That is, the rotation speed of the drum 3 is temporarily reduced from the level at which the centrifugal force acting on the laundry in the drum is greater than the gravity to the level at which the centrifugal force is smaller than the gravity.

The time point at which the rotation speed of the drum 3 is to be reduced is determined by monitoring the fluctuation of the acceleration component as shown in Fig. 15, and detecting the position of the eccentric load on the basis of the occurrence of the minimum peak $A_{min}$. The rotation speed is reduced at a proper time point in a period during which the eccentric load is moved upward after having passed through the lowermost position of the drum 3 (for example, in an angular range from a rotational position 90 degrees before the uppermost position to the uppermost position). Thus, a part of the laundry located adjacent the position of the eccentric load falls.

The centrifugal force acting on the laundry in the drum 3 is proportional to a distance from a rotation center (rotation shaft 7). Therefore, a smaller centrifugal force acts on a part of the laundry located closer to the rotation center. If the rotation speed of the drum 3 is reduced from the level at which the centrifugal force acting on the entire laundry is greater than the gravity, the part of the clustered laundry located closer to the rotation center first falls by the gravity. By properly setting the rotation speed after the speed reduction and the speed reduction period, it becomes possible to cause the part of the laundry located closer to the rotation center to fall off from the other part of the laundry adhering onto the inner circumferential surface of the drum 3 thereby to be distributed in the drum.

Thereafter, the magnitude and position of an eccentric load exerted on the drum 3 at this time are detected on the basis of an acceleration component detected again by the acceleration sensor 29 (Step S35). Then, it is judged whether the magnitude of the detected eccentric load is not greater than the G-balance allowable level (Step S36).

If the magnitude of the eccentric load exerted on the drum 3 is not greater than the G-balance allowable level, the aforesaid preliminary dehydration is carried out (Step S37).

On the other hand, if the magnitude of the eccentric load exerted on the drum 3 is greater than the G-balance allowable level, the process returns to Step S34 to perform the G-balancing operation again. A process sequence of Steps S34 to S36 is repeated until the magnitude of the eccentric load exerted on the drum 3 is reduced to not greater than the G-balance allowable level.

When the preliminary dehydration is completed after the magnitude of the eccentric load exerted on the drum 3 is reduced to not greater than the G-balance allowable level, the magnitude and position of an eccentric load exerted on the drum 3 at this time are detected on the basis of an acceleration component detected by the acceleration sensor 29 (Step S38). Then, it is judged whether the magnitude of the detected eccentric load is not greater than a counter-balance allowable level as a reference value (Step S39). The counter-balance allowable level is set smaller than the G-balance allowable level (second reference value).

If the magnitude of the eccentric load exerted on the drum 3 is not greater than the counter-balance allowable level, there is no need to perform the counter-balancing operation to counter-balance the eccentric load on the drum 3. Therefore, the rotation speed of the drum 3 which has been rotated at about 300 rpm is increased to a higher rotation speed (about 700 rpm), which is kept for the dehydration (Step S45).

On the other hand, if the magnitude of the eccentric load exerted on the drum 3 is greater than the counter-balance allowable level, the counter-balancing operation is performed.

The counter-balancing operation to be performed in Steps S40 to S42 is substantially the same process as in Steps S71 to S74 in Fig. 6 in accordance with the first embodiment.

After the counter-balancing operation, the magnitude and position of an eccentric load exerted on the entire drum 3 at this time is detected on the basis of an acceleration component detected again by the acceleration sensor 29 (Step S42). Then, it is judged whether the magnitude of the detected eccentric load is not greater than the counter-balance allowable level (Step S43).

If the magnitude of the eccentric load exerted on the entire drum 3 is not greater than the counter-balance allowable level, the rotation speed of the drum 3 which has been rotated at about 100 rpm is increased to a higher rotation speed (about 700 rpm), which is kept for the dehydration (Step S45).

On the other hand, if the magnitude of the eccentric load exerted on the entire drum 3 is greater than the counter-balance allowable level, the eccentric load on the drum 3 is not yet canceled by the counter-balancing operation. Therefore, the rotation speed is increased to an intermediate rotation speed (about 500 rpm) at which vibrations are suppressed even with the eccentric load exerted on the drum 3, and this rotation speed is kept for the dehydration (Step S44). Alternatively, a process sequence of Steps S41 to S43 may be repeated until the magnitude of the eccentric load exerted on the entire drum 3 is reduced to not greater than the counter-balance allowable level.

In Step S44 or S45, the dehydration process ends after a lapse of a predetermined dehydration period.

In this embodiment, the eccentric load generated by the laundry can be canceled by the eccentric load generated by the water retained in the water tanks 20 and, therefore, virtually no eccentric load is exerted on the entire drum 3. Thus, vibrations and noises due to the vibrations can virtually be prevented even if the dehydration process is performed with the uneven distribution of the laundry. Particularly, the counter-balancing operation is performed after the eccentric load is roughly distributed by the G-balancing operation, so that a wider range of eccentric loads can be canceled.

[Fourth Embodiment]

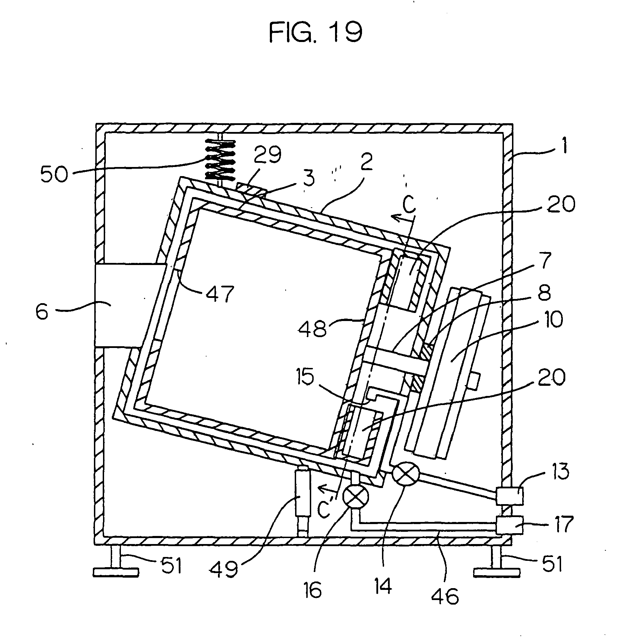

A drum-type washing machine according to a fourth embodiment of the present invention will be described with reference to Figs. 19 to 24.

Fig. 19 is a schematic vertical sectional view illustrating the overall construction of the drum-type washing machine according to the fourth embodiment. Components having the same construction as or equivalent to those of the washing machine of the first embodiment are denoted by the same reference characters.

In the drum-type washing machine, a rotation shaft 7 is connected to the back of a drum 3, and the rotation shaft 7 projects rearwardly of the outer tub 2. The rotation shaft 7 is attached to the outer tub 2 via a bearing 8. A rear end of the rotation shaft 7 is coupled to a DD (direct drive) motor 10. Therefore, the drum 3 is rotated about the rotation shaft 7 by the DD motor 10 in washing and rinsing processes.

One feature of this embodiment is that the rotation shaft 7 is inclined. More specifically, the rotation shaft 7 is inclined at an angle of not greater than 30 degrees with respect to a horizontal line, preferably at 10 to 20 degrees, more preferably at about 15 degrees with respect to the horizontal line. As a result, the drum 3 supported by the rotation shaft 7 is rotated in a state tilted at an angle of not greater than 30 degrees with respect to the horizontal line. In this case, the drum 3 is tilted so that an opening 47 provided on the front side of the drum 3 is directed diagonally upward. This arrangement provides an effect that laundry can easily be loaded in and unloaded from the tilted drum 3 through the opening 47 directed diagonally upward.

A reason why the drum 3 is tilted at an angle of not greater than 30 degrees is to prevent the laundry retained in the drum 3 from leaning forward or rearward along the rotation axis, i.e., from clustering on the front side or the rear side in the drum 3.

According to an experiment conducted by the inventors of the present invention, the laundry is liable to cluster on the rear side (on the right side in Fig. 19) in the drum 3 when the drum 3 is tilted at an excessively great tilt angle in Fig. 19. As a result, the laundry cannot sufficiently be agitated when the drum 3 is rotated in the washing process, so that a washing performance may be deteriorated. Where the drum 3 is tilted at a tilt angle of not greater than 30 degrees, on the other hand, the washing performance is not deteriorated without the leaning of the laundry along the rotation axis.

In this embodiment, therefore, the drum 3 is tilted at about 15 degrees so that the laundry can easily be loaded in and unloaded from the drum 3 and yet the deterioration of the washing performance is prevented.

Baffles (not shown) project from appropriate positions on the inner circumferential surface of the drum 3 for moving up the laundry. A multiplicity of water communication perforations (not shown) are formed in the circumference of the drum 3. During the washing and rinsing processes, water retained in the outer tub 2 flows into the drum 3 through the water communication perforations. During a dehydration process, water extracted from the laundry in the drum 3 is scattered away toward the outer tub 2 through the water communication perforations.

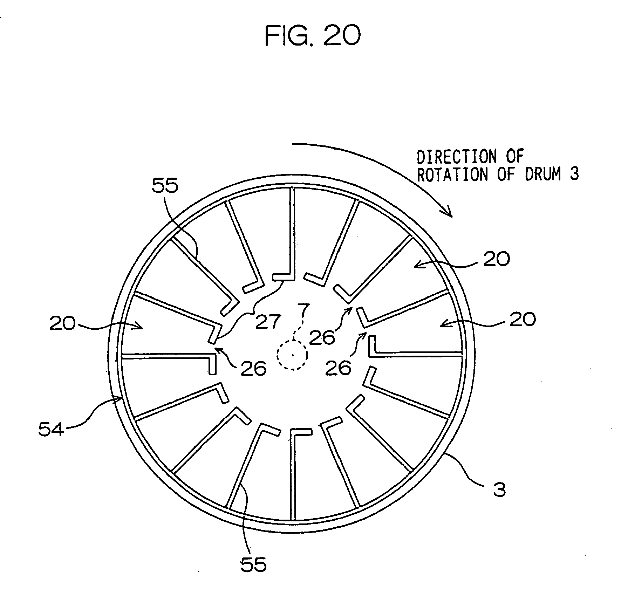

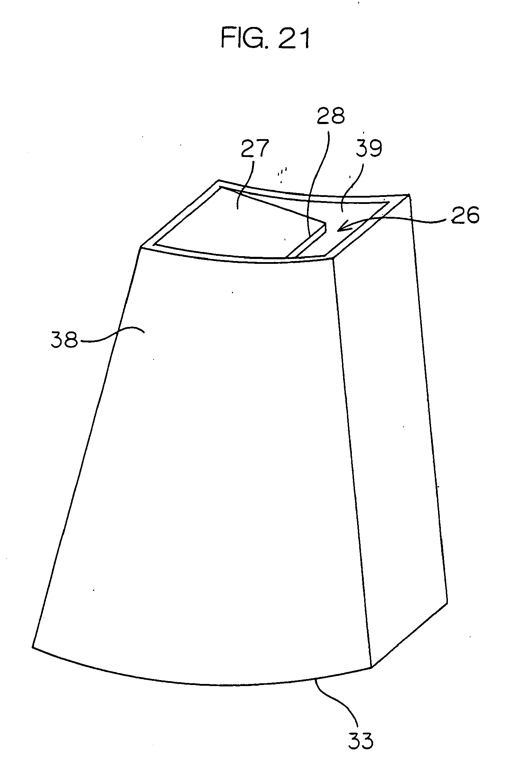

The back of the drum 3 is closed by a rear wall 48, and water tanks 20 are provided on the rear side of the rear wall 48. That is, the water tanks 20 are provided between the rear wall 48 of the drum 3 and the outer tub 2, and rotatable together with the rear wall 48 of the drum 3. The construction of the water tanks 20 will more specifically be described with reference to Figs. 20 and 21. The water tanks 20 may be provided within the drum 3 (on the front side of the rear wall 48) rather than outside the drum 3 (on the rear side of the rear wall 48).

The drum-type washing machine includes a water supply mechanism and a water drain mechanism. The water supply mechanism features in that a water supply port 15 is provided in the outer tub 2 and opposed to each of the water tanks 20 being rotated to the lowermost position. Particularly, the water supply port 15 is provided under the rotation shaft 7. Therefore, water supplied from the water supply port 15 does not contact the rotation shaft 7, so that the water can properly be supplied into the water tanks 20. The water supplied from the water supply port 15 flows out of the water tanks 20, and is retained in the outer tub 2 so as to be used for washing and rinsing the laundry.

A water drain port is provided at the lowermost position of the outer tub 2 (at a lower middle position adjacent to the rear edge of the outer tub 2 in Fig. 19), and one end of a water drain pipe 46 is connected to the water drain port. In a water drain process, the water in the outer tub 2 is drained to the outside through the water drain pipe 46.

A water drain pump may be provided in the midst of the water drain pipe 46 for forcibly draining the water.

A pair of dampers 49 and a pair of coil springs 50 for supporting the outer tub 2 are provided in a housing 1. The pair of dampers 49 support lower rear portions of the outer tub 2, and connect the outer tub 2 to an inner bottom surface of the housing 1. The dampers 49 support the outer tub 2 so that vibrations of the outer tub 2, if occurring, can be absorbed.

The pair of coil springs 50 support upper front portions of the outer tub 2, and connect the outer tub 2 to the ceiling of the housing 1. The outer tub 2 is supported by the dampers 49 and the coil springs 50 so that the outer tub 2 can sway within the housing 1.

An acceleration sensor 29 is provided, for example, on an upper front portion of the outer tub 2. The acceleration sensor 29 detects accelerations acting vertically and laterally (perpendicularly to a paper face) on the outer tub 2. The magnitude and position of an eccentric load exerted on the entire drum 3 due to uneven distribution of the laundry retained in the drum 3 can be determined on the basis of the result of the detection by the acceleration sensor 29.

Fig. 20 is a sectional view taken along a line C-C' in Fig. 19. Fig. 21 is a perspective view illustrating the outer appearance of one of the water tanks.

An annular container 54 is provided on the rear side of the rear wall 48 of the drum 3. The container 54 includes the plurality of water tanks 20, 20... which are arranged circumferentially equidistantly about the rotation shaft 7.

Referring to Figs. 20 and 21, the annular container 54 is constituted by a pair of annular plates 38, 39 spaced a predetermined distance parallel to each other, and a peripheral plate 33 closing the periphery of a space between the pair of annular plates 38, 39. In the annular container 54, partition plates 55 are equidistantly provided to radially partition the container into the plurality of water tanks 20. In this embodiment, the annular container 54 is partitioned into 16 water tanks 20 by 16 partition plates 55.

The water tanks 20 each have an opening 26 which opens toward the rotation center. A separation plate 27 is provided on the opening 26 of each of the water tanks 20 to cover about 1/2 to about 2/3 of the opening. The separation plate 27 covers a forward portion of the opening 26 with respect to the direction of rotation of the water tanks 20 which rotate together with the drum 3. The presence of the separation plates 27 prevents water from spilling out of undesired ones of the water tanks 20.

Further, the separation plates 27 are each inclined downward toward an edge 28 thereof which faces the opening 26 to guide water into the water tank through the opening 26.

The water tanks 20 are each dimensioned such that the radius of arcuate edges of the opening 26 is 125 mm, the radius of an arcuate outer periphery thereof is 275 mm, and the thickness thereof (distance between the annular plates 38 and 39) is 25 mm.

The plurality of water tanks 20 are constituted by the pair of annular plates 38, 39, the peripheral plate 33 and the partition plates 55 as described above, but may be constituted, for example, by four parts in consideration of easy mounting thereof on the drum 3. More specifically, it is preferred that the annular container 54 is equally divided into four 90-degree parts each including four water tanks, and the four parts are combined to constitute the 16 water tanks.

The construction of the water tanks is not limited to those described above in this embodiment, but the water tanks may be independently constructed.

Further, the lumber of the water tanks is not limited to 16, but may be any other number.

Where the drum is tilted at an excessively great angle with respect to the horizontal axis, the volume of the water to be retained in the water tanks is reduced, so that a counter-balancing effect to be described later is reduced. From this viewpoint, the tilt angle of the drum with respect to the horizontal line is preferably not greater than 30 degrees.

The electrical construction of the drum-type washing machine of the fourth embodiment is substantially the same as in the third embodiment with a slight difference in the control program.

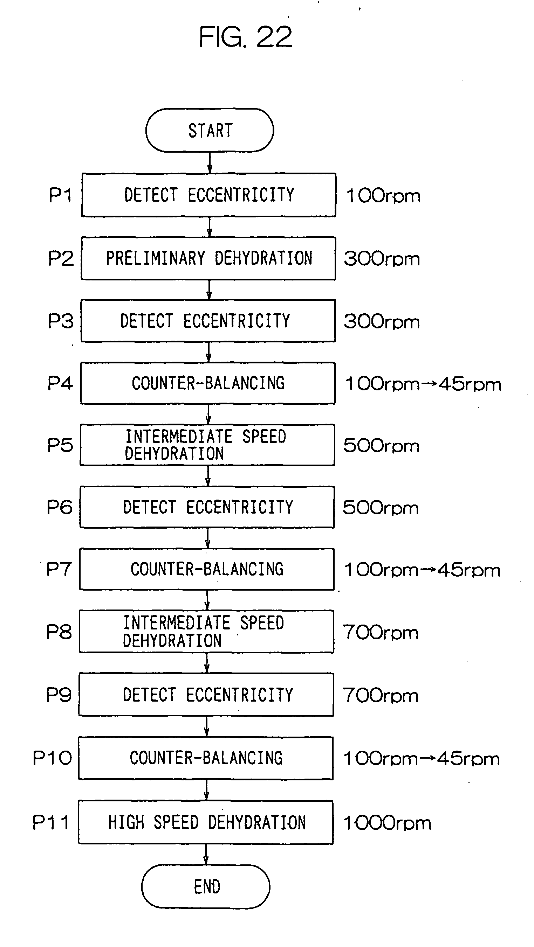

Fig. 22 is a flow chart illustrating the outline of a control operation to be performed in the dehydration process in the drum-type washing machine.

First, the drum 3 is rotated at 100 rpm, and an eccentricity (the magnitude and angular position of an eccentric load) is detected (Step P1). If the detected eccentricity is within an allowable range, the drum 3 is rotated at 300 rpm for preliminary dehydration (Step P2). Then, an eccentricity of the drum 3 rotated at 300 rpm is detected (Step P3). In turn, a counter-balancing operation is performed to cancel the eccentricity detected in Step P3 (Step P4).

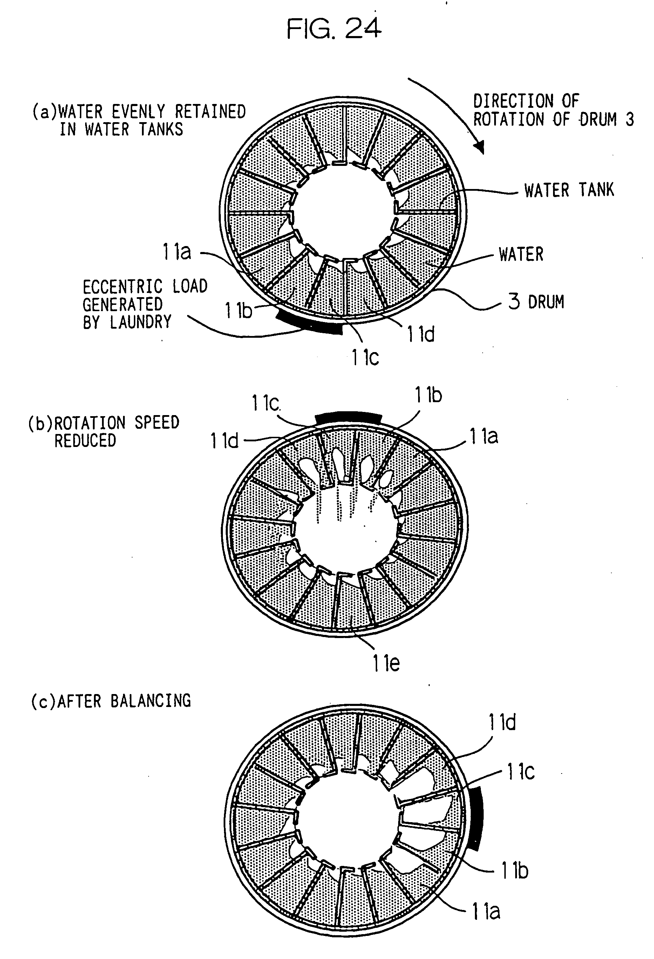

With reference to Figs. 24(a)-(c), an explanation will be given to the counter-balancing operation. In the counter-balancing operation, the plurality of water tanks 20 are first each filled with water. When the drum 3 is rotated at a rotation speed not lower than a predetermined level, e.g., not lower than 100 rpm in this embodiment, the water can be retained in the respective water tanks 20 by a centrifugal force generated by the rotation. Therefore, the water tanks 20 are each filled with the water while the drum 3 is rotated at 100 rpm. (see Fig. 24(a)).

Subsequently, the water is caused to spill selectively from the water tanks 20 so as to cancel the eccentric load occurring due to the uneven distribution of the laundry retained in the drum 3. When the rotation speed of the drum 3 is reduced to lower than the predetermined level, the water falls out of the water tanks 20. In this embodiment, therefore, the rotation speed of the drum 3 is reduced to 45 rpm for a short period at a predetermined time point. The time point for the speed reduction is determined so that the water falls out of water tanks 20 located at the position of the eccentric load (Fig. 24(b)).

This operation is performed once to several times, whereby a counter-balanced state can be established in which the eccentric load generated by the laundry is canceled by a load of the water retained in the water tanks 20.

Referring back to Fig. 22, after the counter-balancing operation is performed in Step P4, the drum 3 is rotated, for example, at 500 rpm for intermediate speed dehydration (Step P5). In this intermediate speed dehydration, an eccentricity is detected again (Step P6).

The counter-balancing operation performed in Step P4 aims at canceling the eccentric load occurring when the drum 3 is rotated at 300 rpm. When the rotation speed of the drum 3 is increased from 300 rpm to 500 rpm, the water is further extracted from the laundry, so that the eccentricity is changed. This is why the eccentricity occurring during the intermediate speed dehydration (when the drum 3 is rotated at 500 rpm) is detected in Step P6.

Then, the counter-balancing operation is performed in Step P7 to cancel the eccentricity. The rotation speed of the drum 3 which is now free from the eccentricity is further increased, and the drum is rotated at 700 rpm (Step P8). Then, an eccentricity is detected again (Step P9), because the water is further extracted from the laundry to change the eccentricity.

Subsequently, the counter-balancing operation is performed to cancel the eccentricity (Step P10). Thereafter, the drum 3 is rotated at 1000 rpm for high speed dehydration (Step P11).

If the eccentricity detected in Step P3, P6 or P9 is at a level that possibly causes no trouble during the rotation of the drum for the subsequent dehydration, the corresponding counter-balancing operation in Step P4, P7 or P10 is skipped, and the drum 3 is rotated at a rotation speed for the subsequent dehydration.

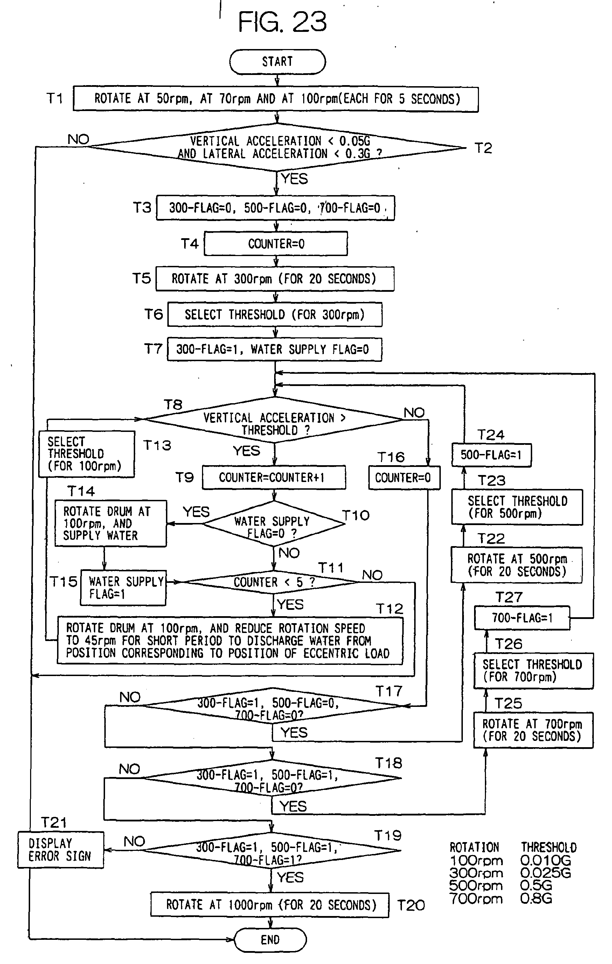

Fig. 23 is a flow chart illustrating in detail the dehydration control operation described with reference to Fig. 22. The control operation will more specifically be described with reference to Fig. 23.

Prior to the dehydration process, the water drain valve 16 is opened by the valve driving section 42 in response to a command from the microprocessor 30. Thus, the water retained in the outer tub 2 and water to be discharged into the outer tub 2 in the following dehydration process are drained from the water drain port 17 through the water drain pipe 46.

When the dehydration process is started, the microprocessor 30 controls the DD motor 10 via the inverter controlling section 43 to rotate the drum 3 at 50 rpm, at 70 rpm and at 100 rpm each for 5 seconds (Step T1). At a rotation speed of 100 rpm, the centrifugal force acting on the laundry|in the drum 3 is greater than the gravity, so the that laundry adheres onto the inner circumferential surface of the drum 3 and rotates together with the drum 3. In this state, it is judged on the basis of an output of the acceleration sensor 29 whether a vertical acceleration is smaller than 0.05G and a lateral acceleration is smaller than 0.3G (Step T2). If the vertical acceleration and the lateral acceleration do not satisfy these conditions, an error sign is displayed (Step T21), and the dehydration process is interrupted. In such a case, the subsequent operations are not performed, because the vertical acceleration or the lateral acceleration is greater than a preset level.

If the vertical acceleration and the lateral acceleration satisfy these conditions, flags each indicative of a history of the rotation speed of the drum 3 are initialized. That is, "0" is put in a 300-flag indicative of a history of the rotation of the drum 3 at 300 rpm, in a 500-flag indicative of a history of the rotation of the drum 3 at 500 rpm, and in a 700-flag indicative of a history of the rotation of the drum 3 at 700 rpm (Step T3).

After a counter is reset to "0" (Step T4), the microprocessor 30 increases the rotation speed of the drum 3 to 300 rpm, at which the drum is rotated for 20 seconds (Step T5), and selects a threshold for 300 rpm (Step T6). This threshold is a vertical acceleration level, e.g., 0.025G, allowable when the drum 3 is rotated at 300 rpm.

Then, "1" is put in the 300-flag, and a water supply flag is reset to "0" (Step T7).

Subsequently, an eccentric load is detected, and it is judged whether a vertical acceleration detected by the acceleration sensor 29 is greater than the threshold (0.025G) (Step T8). If the vertical acceleration is greater than the allowable level, the counter is incremented by one (Step T9) . Then, the microprocessor 30 judges whether a water supply flag is "0" (Step T10). If the water supply flag is set at "0" which indicates that the water is not supplied, the microprocessor rotates the drum 3 at 100 rpm and, in this state, issues a command to open the water supply valve 14 (Step T14). Then, water is supplied from the water supply port 15. Since the openings 26 of the plurality of water tanks 20 rotating together with the drum 3 pass below the water supply port 15, the respective water tanks 20 are filled with the water. The water retained in the water tanks 20 is prevented from spilling by the centrifugal force.

On the other hand, the laundry is pressed against the inner circumferential surface of the drum 3 by the centrifugal force, so that the eccentric load occurring due to the uneven distribution of the laundry is kept unchanged. Therefore, the eccentric load exerted on the drum 3 is not changed as compared with that before the water tanks 20 are filled with the water.

Then, the microprocessor 30 sets the water supply flag at "1" (Step T15), and the process goes to Step T11.

If the water supply flag is not set at "0" in Step T10, the water supply is already completed, so that the process goes to Step T11.

In Step 11, it is judged whether the value of the counter is smaller than "5". If the counter value is smaller than "5", the water is caused to spill selectively from the water tanks 20 on the basis of the position of the eccentric load detected in Step T8 to cancel the eccentric load (Step T12). For example, the rotation of the drum 3 is controlled so as to spill the water from water tanks located at the same rotational angular position as the position of the eccentric load or at the closest rotational angular position to the position of the eccentric load. That is, the rotation speed of the drum 3 is reduced for a short period from the level (e.g., 100 rpm) at which the centrifugal force acting on the water in the water tanks 20 is greater than the gravity to the level (e.g., 45 rpm) at which the centrifugal force is smaller than the gravity. At this time, the water is spilt from the water tanks 20 located at upper rotational positions of the drum 3, so that the amounts of the water retained therein are reduced.

In this embodiment, the drum is tilted with respect to the horizontal line and, hence, the plurality of water tanks 20 are also tilted. Therefore, the falling water hardly flows into water tanks 20 passing therebelow

Subsequently, a threshold for 100 rpm is selected (Step T13). This threshold is a vertical acceleration level, e.g., 0.010G, allowable when the drum 3 is rotated at 100 rpm. Then, the process returns to Step T8 to detect an eccentric load, and it is judged whether a vertical acceleration detected by the acceleration sensor 29 is greater than the threshold (0.010G). If this judgment is positive, a process sequence of Steps T9, T10, T11 and T12 is repeated until the counter reaches "5".

When the counter reaches "5" in Step T11, an error sign is displayed (Step T21), and the dehydration process is interrupted. That is, where the eccentric load is not reduced to not greater than the allowable level even after the counter-balancing operation is continuously performed five times, it is judged that an unexpected accident has occurred, and the subsequent operations are not performed.

If it is judged in Step T8 that the vertical acceleration is smaller than the threshold, the counter is reset to "0" (Step T16), and it is judged whether a condition of 300-flag=1, 500-flag=0 and 700-flag=0 is satisfied (Step T17). If this condition is satisfied, the microprocessor 30 rotates the drum 3 at a rotation speed of 500 rpm for 20 seconds (Step T22). Then, a threshold for 500 rpm is selected (Step T23), and "1" is put in the 500-flag (Step T24). Thereafter, the process returns to Step T8, and a vertical acceleration is detected. Then, the vertical acceleration is compared with the threshold selected in Step T23.

If the condition in Step T17 is not satisfied, it is judges whether a condition of 300-flag=1, 500-flag=1 and 700-flag=0 is satisfied (Step T18). If this condition is satisfied, the microprocessor 30 rotates the drum 3 at 700 rpm for 20 seconds (Step T25). Then, a threshold for 700 rpm is selected (Step T26), and "1" is put in the 700-flag (Step T27). Thereafter, the process returns to Step T8, and a detected vertical acceleration is compared with the threshold selected in Step T26.

The thresholds to be employed in Steps T23 and T26 are, for example, 0.5G and 0.8G, respectively.

By thus setting the thresholds for 300 rpm, 500 rpm and 700 rpm at the levels suitable for the respective rotation speeds, the counter-balancing operation can be performed so that vibrations caused due to the high speed rotation of the drum 3 can be reduced to not greater than the threshold level. Thus, the vibrations and noises caused due to the high speed rotation of the drum 3 can be suppressed.

If the condition in Step T18 is not satisfied, it is judged for confirmation whether a condition of 300-flag=1, 500-flag=1 and 700-flag=1 is satisfied (Step T19). If at least one of these flags is set at "0", an error sign is displayed (Step T21), and then the dehydration process is interrupted. If the condition in Step T19 is satisfied, the microprocessor 30 rotates the drum 3 at 1000 rpm for 20 seconds, and ends the dehydration process.

The drum-type washing machine according to the fourth embodiment may be modified as follows.

In Fig. 19, the housing 1 is supported by a plurality of legs 51, and a weight sensor (not shown) is provided on at least one of the legs 51. A weight acting on the leg 51 is detected by the weight sensor. The detected weight is sent to the microprocessor 30. The microprocessor 30 calculates the weight of the laundry retained in the drum 3 by comparing a weight detected when no laundry is loaded in the drum 3 with a weight detected when the laundry is loaded in the drum. The measurement and calculation of the weight are carried out before the washing process is started, whereby the control operation described with reference to Fig. 23 can more advantageously be performed according to the weight of the laundry.

That is, the thresholds for the respective rotation speeds to be selected in Steps T13, T6, T23, T26 in Fig. 23 can each be set at different levels depending on the weight of the laundry. Thus, the control operation can be performed for further reduction of the vibrations.

Table 1 shows one example of the setting of the acceleration threshold levels for rotation speeds of 100 rpm, 300 rpm, 500 rpm and 700 rpm according to the laundry weight.

Table 1

| [100 rpm] | Laundry weight | Threshold |
|---|---|---|
| | 0kg to smaller than 2kg | 0.025G |
| | 2kg to smaller than 4kg | 0.020G |
| | 4kg to smaller than 6kg | 0.015G |
| | 6kg to smaller than 7kg | 0.013G |
| | not smaller than 7kg | 0.010G |
| [300 rpm] | Laundry weight | Threshold |
| | 0kg to smaller than 2kg | 0.05G |
| | 2kg to smaller than 4kg | 0.10G |
| | 4kg to smaller than 6kg | 0.15G |
| | 6kg to smaller than 7kg | 0.20G |
| | not smaller than 7kg | 0.25G |
| [500 rpm] | Laundry weight | Threshold |
| | 0kg to smaller than 2kg | 0.30G |
| | 2kg to smaller than 4kg | 0.35G |
| | 4kg to smaller than 6kg | 0.40G |
| | 6kg to smaller than 7kg | 0.45.G |
| | not smaller than 7kg | 0.50G |
| [700 rpm] | Laundry weight | Threshold |
| | 0kg to smaller than 2kg | 0.60G |
| | 2kg to smaller than 4kg | 0.65G |
| | 4kg to smaller than 6kg | 0.70G |
| | 6kg to smaller than 7kg | 0.75G |
| | not smaller than 7kg | 0.8G |

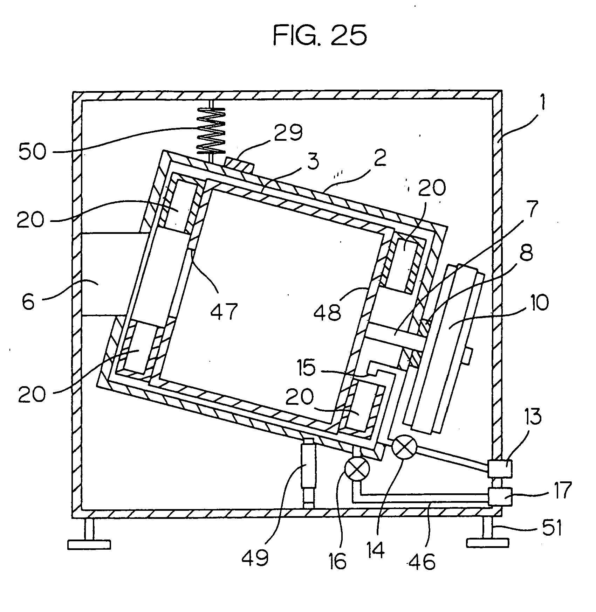

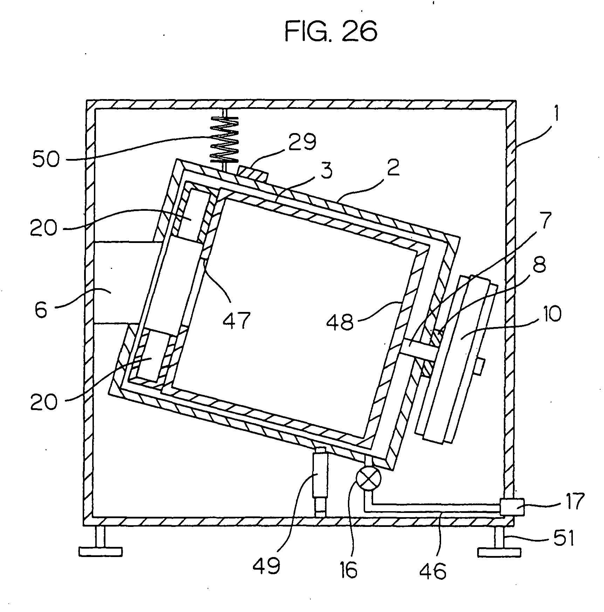

The drum-type washing machine according to the fourth embodiment may be modified as shown in Figs. 25 and 26. That is, the water tanks 20 may be provided not only on the rear side of the drum 3 but also on the front side of the drum 3 as shown in Fig. 25.

Alternatively, the water tanks 20 may be provided on the front side of the drum 3 rather than on the rear side of the drum 3 as shown in Fig. 26.

In Figs. 25 and 26, the water tanks 20 provided on the front side are of the type described with reference to Fig. 11 in the second embodiment and, therefore, do not require water supply and discharge.

In the first to third embodiments described above, the water tanks 20 may be provided on the front side of the drum rather than on the rear side of the drum.

It should be understood that the present invention is not limited to the embodiments described above, but various modifications may be made within the scope of the present invention as defined by the appended claims.

This application claims priority benefits under the convention on the basis of Japanese Patent Application No. 2000-117775 filed to the Japanese Patent Office on April 19, 2000, Japanese Patent Application No. 2000-282350 filed to the Japanese Patent Office on September 18, 2000, Japanese Patent Application No. 2000-288626 filed to the Japanese Patent Office on September 22, 2000, and Japanese Patent Application No. 2000-323651 filed to the Japanese Patent Office on October 24, 2000.

**Claims**

1. A washing machine comprising:

   a drum (3) which is rotated for washing and dehydrating laundry retained therein;

   **characterized by**
   a plurality of liquid chambers (20) provided circumferentially equidistantly about a rotation axis (7) of the drum (3) and rotatable in synchronization with the drum (3) to retain a liquid (W) therein with a centrifugal force;
   eccentric load detecting means (32) for detecting a magnitude and a position of an eccentric load occurring due to uneven distribution of the laundry in the drum (3);
   comparing means (34) for comparing the magnitude of the eccentric load detected by the eccentric load detecting means (32) with a reference value;
   liquid filling means for filling the liquid (W) substantially evenly in the respective liquid chambers (20); and
   liquid discharge controlling means for temporarily reducing a rotation speed of the drum (3) on the basis of the position of the eccentric load detected by the eccentric load detecting means (32) so that the liquid (W) is discharged from a liquid chamber (20) located at or adjacent the position of the eccentric load for reduction of a liquid amount therein.

2. The machine of claim 1, **characterized in that** the liquid discharge controlling means (31) temporarily reduces the rotation speed of the drum (3) to a level at which a centrifugal force acting on the liquid (W) retained in the liquid chambers (20) is smaller than gravity.

3. The machine of claim 1 or 2, **characterized by**:

   liquid supplying means (13-15) for supplying the liquid (W) into the plurality of liquid chambers (20) in a non-contact manner,

   wherein the liquid filling means fills the respective liquid chambers substantially evenly with the liquid supplied from the liquid supplying means (13-15) with the drum (3) being rotated at a predetermined rotation speed.

4. The machine of claim 1 or 2, **characterized in that** the plurality of liquid chambers (20) are provided by partitioning a sealed annular container (23; 54) containing the liquid (W) therein so as to permit the liquid (W) retained in the respective liquid chambers (20) to move within the container (23; 54).

5. The machine of any of claims 1 to 4, **characterized in that** the liquid discharge from the liquid chamber (20) by the liquid discharge controlling means, and the comparison of the magnitude of the eccentric load with the reference value by the comparing means are repeated a predetermined number of times.

6. The machine of claim 5, **characterized in that** the liquid discharge from the liquid chamber (20) by the liquid discharge controlling means is intermittently effected when the drum (3) assumes a rotational position corresponding to the position of the eccentric load in each turn of the drum (3), and a duration of the liquid discharge is set longer for a subsequent turn of the drum (3) than for a precedent turn of the drum.

7. The machine of claim 5 or 6, **characterized by** a display section (41) for displaying an error sign if the magnitude of the eccentric load is greater than the reference value after the liquid discharge from the liquid chamber (20) by the liquid discharge controlling means and the comparison of the magnitude of the eccentric load with the reference value by the comparing means are repeated the predetermined number of times.

8. The machine of any of claims 1 to 7, **characterized by**
   dehydration driving means for changing the rotation speed of the drum (3) to increase a dehydration rotation speed stepwise to a plurality of dehydration rotation speed levels,
   wherein the comparing means compares the magnitude of the eccentric load with the reference value whenever the dehydration rotation speed is changed.

9. The machine of claim 8, **characterized in that** different reference values are defined as the reference value for the respective dehydration rotation speed levels.

10. The machine of claim 8 or 9, **characterized in that** the dehydration driving means changes the dehydration rotation speed to four dehydration rotation speed levels including about 1/3, about 1/2 and about 2/3 of a final dehydration rotation speed, and the final dehydration rotation speed for the stepwise increase of the dehydration rotation speed.

11. The machine of any of claims 1 to 10, **characterized by** preliminary dehydration driving means for rotating the drum (3) at a preliminary dehydration rotation speed for preliminary dehydration prior to the comparison of the magnitude of the eccentric load with the reference value by the comparing means.

12. The machine of any of claims 1 to 11, **characterized by**:

second comparing means for comparing the magnitude of the eccentric load detected by the eccentric load detecting means with a second reference value; and
G-balancing means for temporarily reducing the rotation speed of the drum to a level at which the centrifugal force acting on the laundry is smaller than the gravity from a level at which the centrifugal force acting on the laundry is greater than the gravity at a time point according to the position of the eccentric load detected by the eccentric load detecting means on the basis of a comparison result provided by the second comparing means.

13. The machine of claim 12, **characterized in that** the comparison of the magnitude of the eccentric load with the second reference value by the second comparing means precedes the comparison of the magnitude of the eccentric load with the reference value by the comparing means.

14. The machine of claim 12, **characterized in that** the comparison of the magnitude of the eccentric load with the second reference value by the second comparing means precedes the preliminary dehydration by the preliminary dehydration driving means.

15. The machine of any of claims 1 to 14, **characterized in that** the eccentric load detecting means (32) detects an angular position of the eccentric load exerted on the drum (3) due to the uneven distribution of the laundry on the basis of a fluctuation of an acceleration or a weight exerted on a support portion of the drum (3) due to the rotation of the drum (3).

16. The machine of any of claims 1 to 14, **characterized in that** the eccentric load detecting means (32) detects the angular position of the eccentric load exerted on the drum (3) due to the uneven distribution of the laundry on the basis of a fluctuation of a torque current of a motor (10) which rotates the drum (3).

17. The machine of any of claims 1 to 16, **characterized in that** the liquid chambers (20) each have an opening (21; 26) which opens toward a rotation center, and are constructed so that, when the drum (3) is rotated at a rotation speed not lower than a predetermined level, the liquid (w) is retained in the liquid chambers (20) by a centrifugal force generated by the rotation of the drum (3) and, when the rotation speed of the drum (3) is lower than the predetermined level, the liquid (W) is spilled down from the liquid chambers (20) in accordance with a change in rotational phase of the drum (3).

18. The machine of claim 17, **characterized in that** the liquid chambers (20) are provided by equidistantly partitioning an annular container (23; 54) along a direction of the rotation by a plurality of partition plates (24; 55).

19. The machine of claim 17 or 18, **characterized in that** the plurality of liquid chambers (20) are each provided with a separation plate (22; 27) covering about 1/2 to about 2/3 of the opening (21; 26), and the separation plate (22; 27) covers a forward portion of the opening.(21; 26) with respect to the direction of the rotation of the liquid chambers (20) which rotate together with the drum (3).

20. The machine of claim 19, **characterized in that** the separation plate (27) is inclined downward toward an edge (28) thereof which faces the opening (26) to guide the liquid (W) into the liquid chamber (20) through the opening (26).

21. The machine of any of claims 17 to 20, **characterized in that** a liquid supply port (15) for supplying the liquid (W) into the liquid chambers (20) is provided below the rotation axis (7).

22. The machine of any of claims 17 to 21, **characterized in that** liquid chambers (20) are provided on a rear side of the drum (3).

23. The machine of any of claims 17 to 22, **characterized in that** liquid chambers (20) are provided on a front side of the drum.

24. The machine of claim 22 or 23, **characterized in that** the liquid chambers (20) are arranged with bottoms thereof being offset from the inner circumferential surface of the drum (3) toward the center of the drum.

25. The machine of any of claims 1 to 24, **characterized in that** the rotation axis (7) about which the drum (3) is rotated is inclined at an angle of not greater than 30 degrees with respect to a horizontal line.

26. The machine of claim 25, **characterized in that** the drum (3) has a closed back (48) and a front opening (47) for loading therein and unloading therefrom the laundry, and the rotation axis (7) is inclined so that the front opening (47) of the drum (3) is directed diagonally upward.

27. A control method for a drum-type washing machine having a drum (3) which is rotated for washing and dehydrating laundry retained therein, and a plurality of liquid chambers (20) provided circumferentially equidistantly about a rotation axis (7) of the drum (3) and rotatable in synchronization with the drum (3), the liquid chambers (20) each having an opening (21; 26) which opens toward a rotation center and being constructed so that, when the drum (3) is rotated at a rotation speed not lower than a predetermined level, a liquid (W) is retained in the liquid chambers (20) by a centrifugal force generated by the rotation of the drum (3) and, when the rotation speed of the drum (3) is lower than the predetermined level, the liquid (W) is spilled down from the liquid chambers (20) in accordance with a change in rotational phase of the drum (3), the drum-type washing machine control method comprising the steps of:

   performing a liquid filling operation (S6; S21; S40; T14) to fill the liquid (W) in the respective liquid chambers (20) while rotating the drum (3) at a rotation speed not lower than the predetermined level; and
   performing a liquid discharging operation (S73; S263; S41; T12) to spill the liquid (W) selectively from the liquid chambers (20) so as to cancel an eccentric load occurring due to uneven distribution of the laundry retained in the drum (3), by reducing the rotation speed of the drum (3) to lower than the predetermined level at a predetermined time point for a short time.

28. The method of claim 27, further comprising the step of:

   performing a comparing operation (S5; S25; S39; T8) to compare a magnitude of the eccentric load exerted on the drum (3) when the drum (3) is rotated at a predetermined rotation speed with a predetermined reference value,

   wherein the liquid discharging step (S73; S263; S41; T12) is performed on the basis of a result provided in the comparing step (S5; S25; S39; T8).

29. The method of claim 27 or 28, wherein the liquid discharging step (573; S263; T12) and the comparing step (S5; S25; T8) are repeated a predetermined number of times.

30. The method of claim 29, wherein a duration of the liquid discharging step is set (S72; S262) longer for a subsequent turn of the drum than for a precedent turn of the drum.

31. The method of any of claims 27 to 30, wherein the rotation speed of the drum (3) is increased stepwise to a plurality of dehydration rotation speed levels, and the comparing step (T8) is performed for each of the dehydration rotation speed levels.

32. The method of any of claims 27 to 31, further comprising the step of performing a preliminary dehydration operation (S37) by rotating the drum at a preliminary dehydration rotation speed prior to the comparing step (S39).

33. The method of any of claims 27 to 32, further comprising the steps of:

   performing a second comparing operation (S33) to compare the magnitude of the eccentric load exerted on the drum (3) when the drum (3) is rotated at the predetermined rotation speed with a second reference value; and performing a speed reducing operation (S34) to temporarily reduce the rotation speed of the drum (3) to a level at which the centrifugal force acting on the laundry is smaller than gravity from a level at which the centrifugal force acting on the laundry is greater than the gravity at a time point according to a position of the eccentric load, on the basis of a result provided in the second comparing step (S33).

**Patentansprüche**

1. Waschmaschine mit:

    einer Trommel (3), die zum Waschen und Trocknen von Wäsche, die darin enthalten ist, rotiert wird, **gekennzeichnet durch**
    eine Mehrzahl von Flüssigkeitskammern (20), die umfänglich, äquidistant um eine Rotationsachse (7) der Trommel (3) bereitgestellt sind und synchron mit der Trommel (3) drehbar sind, um darin eine Flüssigkeit (W) mit einer Zentrifugalkraft zu halten;
    Exzentrische-Last-Erfassungsmittel (32) zum Erfassen einer Größe und einer Position einer exzentrischen Last, die auf Grund einer ungleichmäßigen Verteilung der Wäsche in der Trommel (3) auftritt;
    Vergleichsmittel (34) zum Vergleichen der Größe der exzentrischen Last, die durch die Exzentrische-Last-Erfassungsmittel (32) erfasst wird, mit einem Referenzwert;
    Flüssigkeitsfüllmittel zum Einfüllen der Flüssigkeit (W) im Wesentlichen gleichmäßig in die entsprechenden Flüssigkeitskammern (20); und
    Flüssigkeitsabführungssteuerungsmittel zum zeitweiligen Reduzieren einer Rotationsgeschwindigkeit der Trommel (3) auf der Grundlage der Position der exzentrischen Last, die **durch** die Exzentrische-Last-Erfassungsmittel (32) erfasst wird, so dass die Flüssigkeit (W) von einer Flüssigkeitskammer (20) abgeführt wird, die an oder neben der Position der exzentrischen Last angeordnet ist, um eine Flüssigkeitsmenge darin zu reduzieren.

2. Maschine nach Anspruch 1, **dadurch gekennzeichnet, dass** die Flüssigkeitsabführungssteuerungsmittel (31) die Rotationsgeschwindigkeit der Trommel (3) zeitweilig auf ein Niveau reduzieren, bei dem eine Zentrifugalkraft, die auf die Flüssigkeit (W) wirkt, die in den Flüssigkeitskammern (20) enthalten ist, kleiner ist als die Schwerkraft.

3. Maschine nach Anspruch 1 oder 2, **gekennzeichnet durch**:

    Flüssigkeitszuführungsmittel (13-15) zum Zuführen der Flüssigkeit (W) in die Mehrzahl von Flüssigkeitskammem (20) in einer kontaktfreien Weise,

    wobei die Flüssigkeitsfüllmittel die entsprechenden Flüssigkeitskammern im Wesentlichen gleichmäßig mit der Flüssigkeit füllen, die von den Flüssigkeitszuführungsmitteln (13-15) zugeführt wird, wobei die Trommel (3) rotiert wird mit einer vorbestimmten Rotationsgeschwindigkeit.

4. Maschine nach Anspruch 1 oder 2, **dadurch gekennzeichnet, dass** die Mehrzahl von Flüssigkeitskammern (20) bereitgestellt ist durch Aufteilen eines abgedichteten ringförmigen Behälters (23; 54), der die Flüssigkeit (W) darin beinhaltet, um so der Flüssigkeit (W), die in den entsprechenden Flüssigkeitskammem (20) gehalten wird, zu ermöglichen, sich innerhalb des Behälters (23; 54) zu bewegen.

5. Maschine nach einem der Ansprüche 1 bis 4, **dadurch gekennzeichnet, dass** die Flüssigkeitsabführung aus den Flüssigkeitskammern (20) durch die Flüssigkeitsabführungssteuerungsmittel, und der Vergleich der Größe der exzentrischen Last mit dem Referenzwert durch die Vergleichsmittel eine vorbestimmte Anzahl von Malen wiederholt werden.

6. Maschine nach Anspruch 5, **dadurch gekennzeichnet, dass** die Flüssigkeitsabführung aus den Flüssigkeitskammern (20) durch die Flüssigkeitsabführungssteuerungsmittel abschnittsweise erfolgt, wenn die Trommel (3) eine Rotationsposition entsprechend der Position der exzentrischen Last einnimmt, und zwar bei jeder Umdrehung der Trommel (3), und eine Dauer der Flüssigkeitsabführung für eine folgende Umdrehung der Trommel (3) länger eingestellt wird als für eine vorhergehende Umdrehung der Trommel.

7. Maschine nach Anspruch 5 oder 6, **gekennzeichnet durch** einen Anzeigeabschnitt (41) zum Anzeigen eines Fehlerzeichens, wenn die Größe der exzentrischen Last größer ist als der Referenzwert, und zwar nachdem die Flüssigkeitsabführung von der Flüssigkeitskammer (20) **durch** die Flüssigkeitsabführungssteuerungsmittel und der Vergleich der Größe der exzentrischen Last mit dem Referenzwert **durch** die Vergleichsmittel die vorbestimmte Anzahl von Malen wiederholt wurden.

8. Maschine nach einem der Ansprüche 1 bis 7, **gekennzeichnet durch**
Trocknungsansteuerungsmittel zum Ändern der Rotationsgeschwindigkeit der Trommel (3), um eine Trocknungsrotationsgeschwindigkeit schrittweise auf eine Mehrzahl von Trocknungsrotationsgeschwindigkeitsniveaus zu erhöhen,
wobei die Vergleichsmittel die Größe der exzentrischen Last mit dem Referenzwert vergleicht, wann immer die Trocknungsrotationsgeschwindigkeit geändert wird.

9. Maschine nach Anspruch 8, **dadurch gekennzeichnet, dass** unterschiedliche Referenzwerte definiert sind als der Referenzwert für die jeweiligen Trocknungsrotationsgeschwindigkeitsniveaus.

10. Maschine nach Anspruch 8 oder 9, **dadurch gekennzeichnet, dass** die Trocknungsansteuerungsmittel die Trocknungsrotationsgeschwindigkeit auf vier Trocknungsrotationsgeschwindigkeitsniveaus ändern, beinhaltend ungefähr 1/3, ungefähr 1/2, ungefähr 2/3 einer Trocknungsendrotationsgeschwindigkeit, und die Trocknungsendrotationsgeschwindigkeit, und zwar für das schrittweise Erhöhen der Trocknungsrotationsgeschwindigkeit.

11. Maschine nach einem der Ansprüche 1 bis 10, **gekennzeichnet durch** Vortrocknungsansteuerungsmittel zum Rotieren der Trommel (3) mit einer Vortrocknungsrotationsgeschwindigkeit zum Vortrocknen vor dem Vergleich der Größe der exzentrischen Last mit dem Referenzwert **durch** die Vergleichsmittel.

12. Maschine nach einem der Ansprüche 1 bis 11, **gekennzeichnet durch**:

    zweite Vergleichsmittel zum Vergleichen der Größe der exzentrischen Last, die durch die Exzentrische-Last-Erfassungsmittel erfasst wird, mit einem zweiten Referenzwert; und
    G-Ausgleichsmittel zum zeitweiligen Reduzieren der Rotationsgeschwindigkeit der Trommel auf ein Niveau, bei dem die Zentrifugalkraft, die auf die Wäsche wirkt, kleiner ist als die Gravitationskraft, und zwar von einem Niveau, bei dem die Zentrifugalkraft, die auf die Wäsche wirkt, größer ist als die Gravitationskraft, und zwar zu einem Zeitpunkt, der der Position der exzentrischen Last entspricht, die **durch** die Exzentrische-Last-Erfassungsmittel auf der Grundlage eines Vergleichsergebnisses erfasst wird, das **durch** die zweiten Vergleichsmittel bereitgestellt ist.

13. Maschine nach Anspruch 12, **dadurch gekennzeichnet, dass** der Vergleich der Größe der exzentrischen Last mit dem zweiten Referenzwert durch die zweiten Vergleichsmittel dem Vergleich der Größe der exzentrischen Last mit dem Referenzwert durch die Vergleichsmittel vorausgeht.

14. Maschine nach Anspruch 12, **dadurch gekennzeichnet, dass** der Vergleich der Größe der exzentrischen Last mit dem zweiten Referenzwert durch die zweiten Vergleichsmittel der Vortrocknung durch die Vortrocknungsansteuerungsmittel vorausgeht.

15. Maschine nach einem der Ansprüche 1 bis 14, **dadurch gekennzeichnet, dass** die Exzentrische-Last-Erfassungsmittel (32) eine Winkelposition der exzentrischen Last erfassen, die auf Grund der ungleichmäßigen Verteilung der Wäsche auf die Trommel (3) ausgeübt wird, und zwar auf der Grundlage einer Schwankung einer Beschleunigung oder eines Gewichts, die bzw. das auf Grund der Rotation der Trommel auf einen Lagerabschnitt der Trommel (3) ausgeübt wird.

16. Maschine nach einem der Ansprüche 1 bis 14, **dadurch gekennzeichnet, dass** die Exzentrische-Last-Erfassungsmittel (32) eine Winkelposition der exzentrischen Last erfassen, die auf Grund der ungleichmäßigen Verteilung der Wäsche auf die Trommel (3) ausgeübt wird, und zwar auf der Grundlage einer Schwankung eines Momentenstroms eines Motors (10), der die Trommel (3) rotiert.

17. Maschine nach einem der Ansprüche 1 bis 16, **dadurch gekennzeichnet, dass** die Flüssigkeitskammem (20) jeweils eine Öffnung (21; 26) aufweisen, die sich zu dem Rotationsmittelpunkt hin öffnen, und so konstruiert sind, dass dann, wenn die Trommel (3) mit einer Rotationsgeschwindigkeit nicht niedriger als ein vorbestimmtes Niveau rotiert wird, die Flüssigkeit (W) durch eine Zentrifugalkraft, die durch die Rotation der Trommel erzeugt wird, in den Flüssigkeitskammem (20) gehalten wird, und dann, wenn die Rotationsgeschwindigkeit der Trommel (3) niedriger ist als das vorbestimmte Niveau, die Flüssigkeit (W) aus den Flüssigkeitskammem (20) herausfließt gemäß einer Änderung der Rotationsphase der Trommel (3).

18. Maschine nach Anspruch 17, **dadurch gekennzeichnet, dass** die Flüssigkeitskammern (20) durch äquidistante Aufteilung eines ringförmigen Behälters (23, 54) entlang einer Rotationsrichtung durch eine Mehrzahl von Unterteilungsplatten (24; 55) bereitgestellt sind.

19. Maschine nach Anspruch 17 oder 18, **dadurch gekennzeichnet, dass** die Mehrzahl von Flüssigkeitskammem (20) jeweils mit einer Trennplatte (22; 27) bereitgestellt sind, die ungefähr 1/2 bis ungefähr 2/3 der Öffnung (21; 26) abdeckt, und die Trennplatte (22, 27) einen relativ zu der Rotationsrichtung der Flüssigkeitskammem (20) nach vorn gerichteten Abschnitt der Öffnung (21; 26) abdeckt, die zusammen mit der Trommel (3) rotieren.

20. Maschine nach Anspruch 19, **dadurch gekennzeichnet, dass** die Trennplatte (27) heruntergeneigt ist zu einer Kante (28) davon, die der Öffnung (26) gegenüberliegt, um die Flüssigkeit (W) in die Flüssigkeitskammer (20) durch die Öffnung (26) hindurchzuleiten.

21. Maschine nach einem der Ansprüche 17 bis 20, **dadurch gekennzeichnet, dass** ein Flüssigkeitszuführungsanschluss (15) zum Zuführen der Flüssigkeit (W) in die Flüssigkeitskammern (20) hinein unterhalb der Rotationsachse (7) bereitgestellt ist.

22. Maschine nach einem der Ansprüche 17 bis 21, **dadurch gekennzeichnet, dass** die Flüssigkeitskammern (20) auf einer Rückseite der Trommel (3) bereitgestellt sind.

23. Maschine nach einem der Ansprüche 17 bis 22, **dadurch gekennzeichnet, dass** die Flüssigkeitskammern (20) an einer Vorderseite der Trommel bereitgestellt sind.

24. Maschine nach Anspruch 22 oder 23, **dadurch gekennzeichnet, dass** die Flüssigkeitskammern (20) so angeordnet sind, dass ihre Böden gegenüber der inneren umfänglichen Oberfläche der Trommel (3) hin zu dem Mittelpunkt der Trommel hin versetzt sind.

25. Maschine nach einem der Ansprüche 1 bis 24, **dadurch gekennzeichnet, dass** die Rotationsachse (7), um die die Trommel (3) rotiert wird, mit einem Winkel nicht größer als 30 Grad relativ zu einer horizontalen Linie geneigt ist

26. Maschine nach Anspruch 25, **dadurch gekennzeichnet, dass** die Trommel (3) eine geschlossene Rückseite (48) und eine vorderseitige Öffnung (47) aufweist, um die Wäsche hinein zu beladen und heraus zu entladen, und die Rotationsachse (7) geneigt ist, so dass die vorderseitige Öffnung (47) der Trommel (3) diagonal aufwärts gerichtet ist.

27. Steuerungsverfahren für eine Waschmaschine vom Trommeltyp, mit einer Trommel, die zum Waschen und Trocknen von Wäsche, die drin enthalten ist, rotiert wird, und mit einer Mehrzahl von Flüssigkeitskammern (20), die umfänglich äquidistant um eine Rotationsachse (7) der Trommel (3) bereitgestellt sind und synchron mit der Trommel (3) drehbar sind, wobei die Flüssigkeitskammern (20) jeweils eine Öffnung (21; 26) aufweisen, die sich zu einem Rotationsmittelpunkt hin öffnen und so konstruiert sind, dass dann, wenn die Trommel (3) mit einer Rotationsgeschwindigkeit rotiert wird, die nicht niedriger ist als ein vorbestimmtes Niveau, eine Flüssigkeit (W) durch eine Zentrifugalkraft, die erzeugt wird durch die Rotation der Trommel (3), in den Flüssigkeitskammern gehalten wird, und dann, wenn die Rotationsgeschwindigkeit der Trommel (3) niedriger ist als das vorbestimmte Niveau, die Flüssigkeit (W) aus den Flüssigkeitskammem (20) herausfließt gemäß einer Änderung der Rotationsphase der Trommel (3), wobei das Steuerungsverfahren für die Waschmaschine vom Trommeltyp die Schritte aufweist:

Durchführen eines Flüssigkeitsfüllvorgangs (S6; S21; S40; T14), um die Flüssigkeit (W) in die entsprechenden Flüssigkeitskammern (20) zu füllen, während die Trommel (3) mit einer Rotationsgeschwindigkeit nicht niedriger als ein vorbestimmtes Niveau rotiert wird; und
Durchführen eines Flüssigkeitsabführungsvorgangs (S73; S263; S41; T12), um die Flüssigkeit (W) selektiv aus den Flüssigkeitskammern (20) auszugießen, um so eine exzentrische Last aufzuheben bzw. auszugleichen die auf Grund ungleichmäßiger Verteilung der Wäsche, die in der Trommel (3) enthalten ist, auftritt, und zwar durch Reduzieren der Rotationsgeschwindigkeit der Trommel (3) auf ein niedrigeres als das vorbestimmte Niveau zu einem vorbestimmten Zeitpunkt für eine kurze Zeitdauer.

**28.** Verfahren nach Anspruch 27, ferner mit den Schritten:

Durchführen eines Vergleichsvorgangs (S5; S25; S39; T8), um eine Größe der exzentrischen Last, die auf die Trommel (3) ausgeübt wird, wenn die Trommel (3), mit einer vorbestimmten Rotationsgeschwindigkeit rotiert wird, mit einem vorbestimmten Referenzwert zu vergleichen,

wobei der Flüssigkeitsabführungsschritt (S73; S263; S41; T12) durchgeführt wird auf der Grundlage eines Ergebnisses, das durch den Vergleichsschritt (S12; S25; S39; T8) bereitgestellt wird.

**29.** Verfahren nach Anspruch 27 oder 28, wobei der Flüssigkeitsentladeschritt (S73; S263; T12) und der Vergleichsschritt (S5; S25; T8) eine vorbestimmte Anzahl von Malen wiederholt werden.

**30.** Verfahren nach Anspruch 29, wobei eine Dauer des Flüssigkeitsabführungsschrittes (S72; S262) für eine folgende Drehung der Trommel länger eingestellt wird als für eine vorhergehende Drehung der Trommel.

**31.** Verfahren nach einem der Ansprüche 27 bis 30, wobei die Rotationsgeschwindigkeit der Trommel (3) schrittweise erhöht wird auf eine Mehrzahl von Trocknungsrotationsgeschwindigkeitsniveaus, und der Vergleichsschritt (T8) für jedes der Trocknungsrotationsgeschwindigkeitsniveaus durchgeführt wird.

**32.** Verfahren nach einem der Ansprüche 27 bis 31, ferner mit dem Schritt des Durchführens eines Vortrocknungsvorgangs (S37) durch Rotieren der Trommel mit einer Vortrocknungsrotationsgeschwindigkeit vor dem Vergleichsschritt (S39).

**33.** Verfahren nach einem der Ansprüche 27 bis 32, ferner mit den Schritten:

Durchführen eines zweiten Vergleichsvorgangs (S33), um die Größe der exzentrischen Last, die auf die Trommel (3) wirkt, wenn die Trommel (3) mit einer vorbestimmten Rotationsgeschwindigkeit rotiert wird, mit einem zweiten Referenzwert zu vergleichen; und
Durchführen eines Geschwindigkeitsreduzierungsvorgangs (S34), um zeitweilig die Rotationsgeschwindigkeit der Trommel (3) auf ein Niveau zu reduzieren, bei dem die Zentrifugalkraft, die auf die Wäsche wirkt, kleiner ist als die Schwerkraft, und zwar von einem Niveau, bei dem die Zentrifugalkraft, die auf die Wäsche wirkt, größer ist als die Schwerkraft, und zwar zu einem Zeitpunkt entsprechend einer Position der exzentrischen Last, und zwar auf der Grundlage eines Ergebnisses, das von dem zweiten Vergleichsschritt (S33) bereitgestellt wird.

**Revendications**

**1.** Machine à laver comprenant :

un tambour (3) qui est mis en rotation pour laver et déshydrater le linge contenu dans celui-ci ;

**caractérisé par**
une pluralité de chambres de liquide (20) disposées de façon circonférentielle et à équidistance autour d'un axe de rotation (7) du tambour (3) et pouvant tourner en synchronisation avec le tambour (3) pour retenir un liquide (W) dans celui-ci avec une force centrifuge ;
un moyen de détection de charge excentrique (32) pour la détection d'une magnitude et d'une position d'une charge excentrique survenant à cause d'une répartition inégale du linge dans le tambour (3) ;
un moyen de comparaison (34) pour comparer la magnitude de la charge excentrique détectée par le moyen de détection de charge excentrique (32) avec une valeur de référence ;
un moyen de remplissage de liquide pour le remplissage du liquide (W) sensiblement et uniformément dans les chambres de liquide (20) respectives ; et
un moyen de contrôle de l'évacuation du liquide pour réduire temporairement une vitesse de rotation du tambour (3) sur la base de la position de la charge excentrique détectée par le moyen de détection de la charge excentrique (32), de telle sorte que le liquide (W) est évacué d'une chambre de liquide (20) située au niveau de ou adjacente à la position de la charge excentrique pour réduire une quantité de liquide dans celle-ci.

**2.** Machine selon la revendication 1, **caractérisée en ce que** le moyen de contrôle de l'évacuation du liquide (31) réduit temporairement la vitesse de rotation du tambour (3) à un niveau auquel une force centrifuge agissant sur le liquide (W) contenu dans les chambres de liquide (20) est inférieure à la gravité.

3. Machine selon la revendication 1 ou 2, **caractérisée par** :

des moyens d'alimentation de liquide (13-15) pour alimenter le liquide (W) dans la pluralité de chambres de liquide (20) d'une manière sans contact,

dans laquelle le moyen de remplissage de liquide remplit les chambres de liquide respectives uniformément avec le liquide fourni par les moyens d'alimentation de liquide (13-15), le tambour (3) étant mis en rotation à une vitesse de rotation prédéterminée.

4. Machine selon la revendication 1 ou 2, **caractérisée en ce que** la pluralité de chambres de liquide (20) sont disposées en séparant un récipient annulaire fermé (23 ; 54) contenant le liquide (W) dans celui-ci de façon à permettre au liquide (W) contenu dans les chambres de liquide (20) respectives de se déplacer à l'intérieur du récipient (23 ; 54).

5. Machine selon l'une quelconque des revendications 1 à 4, **caractérisée en ce que** l'évacuation du liquide depuis la chambre de liquide (20) par le moyen de contrôle de l'évacuation du liquide, et la comparaison de la magnitude de la charge excentrique avec la valeur de référence par le moyen de comparaison sont répétées un nombre de fois prédéterminé.

6. Machine selon la revendication 5, **caractérisée en ce que** l'évacuation du liquide de la chambre de liquide (20) par le moyen de contrôle de l'évacuation du liquide est réalisée de façon intermittente quand le tambour (3) assume une position de rotation correspondant à la position de la charge excentrique à chaque tour du tambour (3), et une durée de l'évacuation du liquide est fixée pour être plus longue pour un tour successif du tambour (3) que pour un tour précédent du tambour.

7. Machine selon la revendication 5 ou 6, **caractérisée par** une section d'affichage (41) pour afficher un signe d'erreur si la magnitude de la charge excentrique est supérieure à la valeur de référence après l'évacuation du liquide de la chambre de liquide (20) par le moyen de contrôle de l'évacuation du liquide, et la comparaison de la magnitude de la charge excentrique avec la valeur de référence par le moyen de comparaison sont répétées le nombre de fois prédéterminé.

8. Machine selon l'une quelconque des revendications 1 à 7, **caractérisée par** :

un moyen de commande de déshydratation pour changer la vitesse de rotation du tambour (3) pour augmenter une vitesse de rotation de déshydratation par paliers à une pluralité de niveaux de vitesse de rotation de déshydratation,

dans laquelle le moyen de comparaison compare la magnitude de la charge excentrique avec la valeur de référence chaque fois que la vitesse de rotation de déshydratation est modifiée.

9. Machine selon la revendication 8, **caractérisée en ce que** différentes valeurs de référence sont définies en tant que valeur de référence pour les niveaux de vitesse de rotation de déshydratation respectifs.

10. Machine selon la revendication 8 ou 9, **caractérisée en ce que** le moyen de commande de déshydratation modifie la vitesse de rotation de déshydratation à quatre niveaux de vitesse de rotation de déshydratation, notamment environ 1/3, environ 1/2 et environ 2/3 d'une vitesse finale de rotation de déshydratation, et la vitesse finale de rotation de déshydratation, pour l'augmentation par paliers de la vitesse de rotation de déshydratation.

11. Machine selon l'une quelconque des revendications 1 à 10, **caractérisée par** le moyen de commande de déshydratation préliminaire pour mettre en rotation le tambour (3) à une vitesse de rotation de déshydratation préliminaire pour la déshydratation préliminaire avant la comparaison de la magnitude de la charge excentrique avec la valeur de référence par le moyen de comparaison.

12. Machine selon l'une quelconque des revendications 1 à 11, **caractérisée par** :

un second moyen de comparaison pour comparer la magnitude de la charge excentrique détectée par le moyen de détection de charge excentrique avec une seconde valeur de référence ; et

un moyen d'équilibrage G pour réduire temporairement la vitesse de rotation du tambour à un niveau auquel la force centrifuge agissant sur le linge est inférieure à la gravité, d'un niveau auquel la force centrifuge agissant sur le linge est supérieure à la gravité à un moment selon la position de la charge excentrique détectée par le moyen de détection de charge excentrique sur la base d'un résultat de comparaison fourni par le second moyen de comparaison.

13. Machine selon la revendication 12, **caractérisée en ce que** la comparaison de la magnitude de la charge excentrique avec la seconde valeur de référence par le second moyen de comparaison précède la comparaison de la magnitude de la charge excentrique avec la valeur de référence par le moyen de comparaison.

14. Machine selon la revendication 12, **caractérisée en ce que** la comparaison de la magnitude de la charge excentrique avec la seconde valeur de référence par le second moyen de comparaison précède la déshydratation préliminaire par le moyen de commande de déshydratation préliminaire.

15. Machine selon l'une quelconque des revendications 1 à 14, **caractérisée en ce que** le moyen de détection de charge excentrique (32) détecte une position angulaire de la charge excentrique exercée sur le tambour (3) due à la répartition inégale du linge sur la base d'une fluctuation d'une accélération ou d'un poids exercés sur une partie de support du tambour (3) à cause de la rotation du tambour (3).

16. Machine selon l'une quelconque des revendications 1 à 14, **caractérisée en ce que** le moyen de détection de charge excentrique (32) détecte la position angulaire de la charge excentrique exercée sur le tambour (3) due à la répartition inégale du linge sur la base d'une fluctuation d'un courant de couple d'un moteur (10) qui fait tourner le tambour (3).

17. Machine selon l'une quelconque des revendications 1 à 16, **caractérisée en ce que** les chambres de liquide (20) comportent chacune une ouverture (21 ; 26) qui s'ouvre vers un centre de rotation, et sont construites de telle sorte que, quand le tambour (3) est mis en rotation à une vitesse de rotation non inférieure à un niveau prédéterminé, le liquide (W) soit contenu dans les chambres de liquide (20) par une force centrifuge générée par la rotation du tambour (3) et, quand la vitesse de rotation du tambour (3) est inférieure au niveau prédéterminé, le liquide (W) soit déversé des chambres de liquide (20) selon un changement de la phase de rotation du tambour (3).

18. Machine selon la revendication 17, **caractérisée en ce que** les chambres de liquide (20) sont disposées en séparant à équidistance un récipient annulaire (23 ; 54) le long d'une direction de rotation par une pluralité de plaques de séparation (24 ; 55).

19. Machine selon la revendication 17 ou 18, **caractérisée en ce que** la pluralité de chambres de liquide (20) sont chacune dotée d'une plaque de séparation (22 ; 27) couvrant environ 1 /2 à environ 2/3 de l'ouverture (21 ; 26), et la plaque de séparation (22 ; 27) couvre une partie avant de l'ouverture (21 ; 26) par rapport à la direction de rotation des chambres de liquide (20) qui tournent ensemble avec le tambour (3).

20. Machine selon la revendication 19, **caractérisée en ce que** la plaque de séparation (27) est inclinée vers le bas vers un bord (28) de celle-ci orientée vers l'ouverture (26) pour guider le liquide (W) dans la chambre de liquide (20) à travers l'ouverture (26).

21. Machine selon l'une quelconque des revendications 17 à 20, **caractérisée en ce qu'**un orifice d'alimentation de liquide (15) pour alimenter le liquide (W) dans les chambres de liquide (20) est disposé en dessous de l'axe de rotation (7).

22. Machine selon l'une quelconque des revendications 17 à 21, **caractérisée en ce que** les chambres de liquide (20) sont disposées sur un côté arrière du tambour (3).

23. Machine selon l'une quelconque des revendications 17 à 22, **caractérisée en ce que** les chambres de liquide (20) sont disposées sur un côté avant du tambour.

24. Machine selon la revendication 22 ou 23, **caractérisée en ce que** les chambres de liquide (20) sont agencées avec leurs parties inférieures décalées de la surface circonférentielle intérieure du tambour (3) vers le centre du tambour.

**25.** Machine selon l'une quelconque des revendications 1 à 24, **caractérisée en ce que** l'axe de rotation (7) autour duquel le tambour (3) est mis en rotation est incliné selon un angle non supérieur à 30 degrés par rapport à une ligne horizontale.

**26.** Machine selon la revendication 25, **caractérisée en ce que** le tambour (3) comporte une partie arrière fermée (48) et une ouverture frontale (47) pour charger et décharger le linge dans et hors de celui-ci, et l'axe de rotation (7) est incliné de telle sorte que l'ouverture frontale (47) du tambour (3) soit dirigée en diagonale vers le haut.

**27.** Procédé de commande pour une machine à laver du type à tambour comportant un tambour (3) qui est mis en rotation pour laver et déshydrater le linge contenu dans celui-ci, et une pluralité de chambres de liquide (20) disposées circonférentiellement à équidistance autour d'un axe de rotation (7) du tambour (3) et pouvant tourner en synchronisation avec le tambour (3), les chambres de liquide (20) comprenant chacune une ouverture (21 ; 26) qui s'ouvre vers un centre de rotation et étant construites de telle sorte que, quand le tambour (3) est mis en rotation à une vitesse de rotation non inférieure à un niveau prédéterminé, un liquide (W) est contenu dans les chambres de liquide (20) par une force centrifuge générée par la rotation du tambour (3) et, quand la vitesse de rotation du tambour (3) est inférieure au niveau prédéterminé, le liquide (W) est déversé des chambres de liquide (20) selon un changement de phase de rotation du tambour (3), le procédé de commande de la machine à laver du type à tambour comprenant les étapes consistant à :

réaliser une opération de remplissage du liquide (S6 ; S21 ; S40 ; T14) pour remplir le liquide (W) dans les chambres de liquide (20) respectives tout en mettant en rotation le tambour (3) à une vitesse de rotation non inférieure au niveau prédéterminé ; et

réaliser une opération d'évacuation du liquide (S73 ; S263 ; S41 ; T12) pour déverser le liquide (W) sélectivement des chambres de liquide (20) de façon à annuler une charge excentrique survenant à cause de la répartition inégale du linge contenu dans le tambour (3), en réduisant la vitesse de rotation du tambour (3) à un niveau inférieur au niveau prédéterminé à un moment prédéterminé pour une courte durée.

**28.** Procédé selon la revendication 27, comprenant également l'étape consistant à :

réaliser une opération de comparaison (S5 ; S25 ; S39 ; T8) pour comparer une magnitude de la charge excentrique exercée sur le tambour (3) quand le tambour (3) est mis en rotation à une vitesse de rotation prédéterminée, avec une valeur de référence prédéterminée,

dans laquelle l'étape d'évacuation du liquide (S73 ; S263 ; S41 ; T12) est réalisée sur la base d'un résultat fourni par l'étape de comparaison (S5 ; S25 ; S39 ; T8).

**29.** Procédé selon la revendication 27 ou 28, dans lequel l'étape d'évacuation du liquide (S73 ; S263 ; T12) et l'étape de comparaison (S5 ; S25 ; T8) sont répétées un nombre de fois prédéterminé.

**30.** Procédé selon la revendication 29, dans lequel une durée de l'étape d'évacuation du liquide est fixée (S72 ; S262) pour être plus longue pour un tour successif du tambour que pour un tour précédent du tambour.

**31.** Procédé selon l'une quelconque des revendications 27 à 30, dans lequel la vitesse de rotation du tambour (3) est accrue par paliers à une pluralité de niveaux de vitesse de rotation de déshydratation, et l'étape de comparaison (T8) est réalisée pour chacun des niveaux de vitesse de rotation de déshydratation.

**32.** Procédé selon l'une quelconque des revendications 27 à 31, comprenant également l'étape de réalisation d'une opération de déshydratation préliminaire (S37) en mettant en rotation le tambour à une vitesse de rotation de déshydratation préliminaire avant l'étape de comparaison (S39).

**33.** Procédé selon l'une quelconque des revendications 27 à 32, comprenant également les étapes consistant à :

réaliser une seconde opération de comparaison (S33) pour comparer la magnitude de la charge excentrique exercée sur le tambour (3) quand le tambour (3) est mis en rotation à la vitesse de rotation prédéterminée, avec une seconde valeur de référence ; et

réaliser une opération de réduction de vitesse (S34) pour réduire temporairement la vitesse de rotation du tambour (3) à un niveau auquel la force centrifuge agissant sur le linge est inférieure à la gravité à partir d'un niveau auquel la force centrifuge agissant sur le linge est supérieure à la gravité, à un moment selon une position de la charge excentrique, sur la base d'un résultat fourni dans la seconde étape de comparaison (S33).

# FIG. 1

## FIG. 2

DIRECTION OF ROTATION DURING
WATER SUPPLY
(120rpm)

## FIG. 3

# FIG. 4

# FIG. 5

(a) ROTATION PULSE

ROTATION CYCLE(360°)

(b) TORQUE CURRENT COMPONENT

Vmax

Vmin

# FIG. 6

```
              ┌─────────────┐
              │    START    │
              └─────────────┘
                     │
   S1 ┌──────────────────────────────────────┐
      │ ROTATE DRUM AT 40rpm TO DISCHARGE     │
      │ WATER FROM WATER TANK                 │
      └──────────────────────────────────────┘
                     │
   S2 ┌──────────────────────────────────────┐
      │ ROTATE DRUM AT 300rpm TO 400rpm       │
      │ FOR PRELIMINARY DEHYDRATION           │
      └──────────────────────────────────────┘
                     │
   S3 ┌──────────────────────────────────────┐
      │       ROTATE DRUM AT 90rpm            │
      └──────────────────────────────────────┘
                     │
   S4 ┌──────────────────────────────────────┐
      │       DETECT ECCENTRIC LOAD           │
      └──────────────────────────────────────┘
                     │
   S5           ECCENTRIC LOAD ≦              YES
          <    ALLOWABLE LEVEL?    >──────────────┐
                     │ NO                         │
   S6 ┌──────────────────────────────────────┐   │
      │ ROTATE DRUM AT 120rpm AND             │   │
      │ SUPPLY WATER                          │   │
      └──────────────────────────────────────┘   │
                     │                            │
   S71┌──────────────────────────────────────┐   │
      │       ROTATE DRUM AT 90rpm            │   │
      └──────────────────────────────────────┘   │
   S72┌──────────────────────────────────────┐   │
      │ SET WATER DISCHARGE PERIOD            │   │
      │ (PROGRESSIVELY LONGER FOR LATER TURN) │   │
      └──────────────────────────────────────┘   │
   S73┌──────────────────────────────────────┐   │
      │ REDUCE ROTATION SPEED FOR SET WATER   │   │
      │ DISCHARGE PERIOD (56rpm)              │   │
      └──────────────────────────────────────┘   │
     NO      REQUIRED AMOUNT OF                   │
      <      WATER DISCHARGED?      >  S74        │
                     │ YES                        │
   S8 ┌──────────────────────────────────────┐   │
      │       DETECT ECCENTRIC LOAD           │   │
      └──────────────────────────────────────┘   │
                     │                            │
   S9           ECCENTRIC LOAD ≦              YES │
          <    ALLOWABLE LEVEL?    >──────────────┤
                     │ NO                         │
   S10┌────────────────────────┐  S11┌────────────────────────┐
      │ ROTATE DRUM AT          │    │ ROTATE DRUM AT HIGH ROTATION│
      │ INTERMEDIATE            │    │ SPEED(ABOUT 700rpm) FOR │
      │ ROTATION SPEED          │    │ DEHYDRATION             │
      │ (ABOUT 500rpm)          │    └────────────────────────┘
      │ FOR DEHYDRATION         │
      └────────────────────────┘
                     │
              ┌─────────────┐
              │     END     │
              └─────────────┘
```

## FIG. 7

(a) WATER SUPPLY INTO RESPECTIVE
    WATER TANKS (TO FULL)

DIRECTION OF
ROTATION DURING
DEHYDRATION

ECCENTRIC LOAD
GENERATED BY
LAUNDRY

20a    20b    20c    20d    3    20    W

(b) SPEED REDUCTION
    FOR WATER DISCHARGE

DIRECTION OF
ROTATION DURING
DEHYDRATION

20b    20a    20e    3    20c    20d

(C) AFTER BALANCING

DIRECTION OF
ROTATION DURING
DEHYDRATION

3    20c    20b    20a

## FIG. 8

BACK SIDE OF DRUM

CENTRIFUGAL FORCE : $mr\omega^2$

GRAVITY : $mg$

RADIUS OF DRUM : $r$

FALLING ACCELERATION : $\alpha$

m: WEIGHT OF WATER IN WATER TANK
$\alpha$ : ACCELERATION OF VERTICALLY FALLING WATER
$\omega$ : ANGULAR VELOCITY OF DRUM

$\omega$

FIG. 9

FIG. 10

FIG. 11

DIRECTION OF ROTATION
DURING DEHYDRATION

23

3

25

24

W

7

25a

# FIG. 12

START

S21 — ROTATE DRUM AT 60rpm TO EVENLY DISTRIBUTE WATER WITHIN BALANCER

S22 — ROTATE DRUM AT 300rpm TO 400rpm FOR PRELIMINARY DEHYDRATION

S23 — ROTATE DRUM AT 90rpm

S24 — DETECT ECCENTRIC LOAD

S25 — ECCENTRIC LOAD $\leqq$ ALLOWABLE LEVEL? — YES

NO

S261 — ROTATE DRUM AT 90rpm

S262 — SET WATER DISCHARGE PERIOD (PROGRESSIVELY LONGER FOR LATER TURN)

S263 — REDUCE ROTATION SPEED FOR SET WATER DISCHARGE PERIOD (56rpm)

S264 — REQUIRED AMOUNT OF WATER DISCHARGED? — NO

YES

S27 — DETECT ECCENTRIC LOAD

S28 — ECCENTRIC LOAD $\leqq$ ALLOWABLE LEVEL? — YES

NO

S29 — ROTATE DRUM AT 500rpm FOR DEHYDRATION

S30 — ROTATE DRUM AT 700rpm FOR DEHYDRATION

END

# FIG. 13

# FIG. 14

FIG. 15

ACCELERATION COMPONENT

Amax

Amin

CORRESPONDING TO UPPERMOST POSITION OF DRUM

# FIG. 16

SAMPLE ACCELERATION SIGNAL EVERY 10ms, AND STORE DATA OBTAINED DURING LATEST 40ms PERIOD

10ms LATER  ① 

20ms LATER  ① ② 

30ms LATER  ① ② ③ 

40ms LATER  ① ② ③ ④ 

50ms LATER  ① ② ③ ④ ⑤ 

COMPARE n-th TO (n-4)-th DATA VALUES WITH EACH OTHER AND, WHEN (n-2)-th DATA VALUE IS THE GREATEST, DETERMINE PEAK OF ACCELERATION SIGNAL

n ms LATER  n-4 n-3 n-2 n-1 n 

(a)

ECCENTRIC LOAD

DRUM

n-4

n

n-3

n-1

n-2

(b)  n ms LATER

EP 1 293 598 B1

## FIG. 17

START

S31 | GRADUALLY INCREASE ROTATION SPEED OF DRUM UP TO 100rpm

S32 | DETECT ECCENTRIC LOAD

S33 — ECCENTRIC LOAD ≤ G-BALANCE ALLOWABLE LEVEL ? — YES

NO

S34 | REDUCE ROTATION SPEED OF DRUM TO 35rpm FOR SHORT PERIOD FOR G-BALANCING

S35 | DETECT ECCENTRIC LOAD

S36 — ECCENTRIC LOAD ≤ G-BALANCE ALLOWABLE LEVEL ? — NO

YES

S37 | PRELIMINARY DEHYDRATION (ROTATE DRUM AT 300rpm)

S38 | DETECT ECCENTRIC LOAD

S39 — ECCENTRIC LOAD ≤ WATER DISCHARGE COUNTER-BALANCE ALLOWABLE LEVEL? — YES

NO

S40 | ROTATE DRUM AT 100rpm, AND SUPPLY WATER

S41 | REDUCE ROTATION SPEED OF DRUM TO 45rpm FOR SHORT PERIOD FOR COUNTER-BALANCING

S42 | DETECT ECCENTRIC LOAD

S43 — ECCENTRIC LOAD ≤ COUNTER-BALANCE ALLOWABLE LEVEL? — YES

NO

S44 | ROTATE DRUM AT INTERMEDIATE ROTATION SPEED(ABOUT 500rpm) FOR DEHYDRATION

S45 | ROTATE DRUM AT HIGH ROTATION SPEED (ABOUT 700rpm) FOR DEHYDRATION

END

## FIG. 18

(a) G-BALANCING

ECCENTRIC LOAD
GENERATED BY LAUNDRY

DIRECTION OF
ROTATION DURING
DEHYDRATION

LAUNDRY FALLS

SPEED REDUCTION
FOR SHORT PERIOD

7

3

(b) PRELIMINARY
     DEHYDRATION

ECCENTRIC LOAD
GENERATED BY LAUNDRY

DIRECTION OF
ROTATION DURING
DEHYDRATION

ROTATE AT 300rpm

7

3

FIG. 19

FIG. 20

DIRECTION OF
ROTATION OF DRUM 3

## FIG. 21

# FIG. 22

```
                    ┌─────────────┐
                    │    START    │
                    └─────────────┘
                           │
                           ▼
P1   ┌────────────────────────────────┐   100rpm
     │      DETECT ECCENTRICITY       │
     └────────────────────────────────┘
                           │
                           ▼
P2   ┌────────────────────────────────┐   300rpm
     │    PRELIMINARY DEHYDRATION      │
     └────────────────────────────────┘
                           │
                           ▼
P3   ┌────────────────────────────────┐   300rpm
     │      DETECT ECCENTRICITY       │
     └────────────────────────────────┘
                           │
                           ▼
P4   ┌────────────────────────────────┐   100rpm→45rpm
     │       COUNTER-BALANCING        │
     └────────────────────────────────┘
                           │
                           ▼
P5   ┌────────────────────────────────┐   500rpm
     │       INTERMEDIATE SPEED       │
     │          DEHYDRATION           │
     └────────────────────────────────┘
                           │
                           ▼
P6   ┌────────────────────────────────┐   500rpm
     │      DETECT ECCENTRICITY       │
     └────────────────────────────────┘
                           │
                           ▼
P7   ┌────────────────────────────────┐   100rpm→45rpm
     │       COUNTER-BALANCING        │
     └────────────────────────────────┘
                           │
                           ▼
P8   ┌────────────────────────────────┐   700rpm
     │       INTERMEDIATE SPEED       │
     │          DEHYDRATION           │
     └────────────────────────────────┘
                           │
                           ▼
P9   ┌────────────────────────────────┐   700rpm
     │      DETECT ECCENTRICITY       │
     └────────────────────────────────┘
                           │
                           ▼
P10  ┌────────────────────────────────┐   100rpm→45rpm
     │       COUNTER-BALANCING        │
     └────────────────────────────────┘
                           │
                           ▼
P11  ┌────────────────────────────────┐   1000rpm
     │     HIGH SPEED DEHYDRATION     │
     └────────────────────────────────┘
                           │
                           ▼
                    ┌─────────────┐
                    │     END     │
                    └─────────────┘
```

# FIG. 23

```
                    ( START )
                        │
T1 │ ROTATE AT 50rpm, AT 70rpm AND AT 100rpm(EACH FOR 5 SECONDS) │
                        │
  NO ◄─────◄ VERTICAL ACCELERATION < 0.05G ►───── T2
           AND LATERAL ACCELERATION < 0.3G ?
                        │ YES
         T3 │ 300-FLAG=0, 500-FLAG=0, 700-FLAG=0 │
                        │
            T4 │ COUNTER=0 │
                        │
         T5 │ ROTATE AT 300rpm (FOR 20 SECONDS) │
                        │
         T6 │ SELECT THRESHOLD (FOR 300rpm) │
                        │
         T7 │ 300-FLAG=1, WATER SUPPLY FLAG=0 │
                        │◄──────────────────────────────┐
      T8                │                                │
            ◄─── VERTICAL ACCELERATION > ───► NO         │
                     THRESHOLD ?                         │
  SELECT    T13         │ YES         T16      T24       │
  THRESHOLD        T9 │ COUNTER=COUNTER+1 │  │500-FLAG=1│
  (FOR 100rpm)          │                 │ COUNTER=0 │  │
   T14                  │            T10              T23 │
  ROTATE DRUM  YES ◄─ WATER SUPPLY       SELECT THRESHOLD │
  AT 100rpm, AND      FLAG=0 ?           (FOR 500rpm)     │
  SUPPLY WATER          │ NO                   T22        │
                        │            T11  NO   ROTATE AT 500rpm │
  T15│ WATER SUPPLY ├─ COUNTER < 5 ? ►──  (FOR 20 SECONDS)│
     │ FLAG=1        │     │ YES                          │
                        T12        T27                    │
  │ ROTATE DRUM AT 100rpm, AND REDUCE ROTATION SPEED │700-FLAG=1│
  │ TO 45rpm FOR SHORT PERIOD TO DISCHARGE WATER FROM│   T26    │
  │ POSITION CORRESPONDING TO POSITION OF ECCENTRIC LOAD│ SELECT THRESHOLD │
                        │                    (FOR 700rpm)  │
   NO         300-FLAG=1, 500-FLAG=0, ► T17    T25        │
        ◄──── 700-FLAG=0?                  ROTATE AT 700rpm │
                        │ YES              (FOR 20 SECONDS)│
   NO         300-FLAG=1, 500-FLAG=1, ► T18              │
        ◄──── 700-FLAG=0?                                │
                        │ YES                            │
  T21          300-FLAG=1, 500-FLAG=1, ► T19
  DISPLAY  NO  700-FLAG=1?
  ERROR SIGN ◄──  │ YES
                        │
         │ ROTATE AT 1000rpm (FOR 20 SECONDS) │ T20
                        │
                    ( END )
```

| ROTATION | THRESHOLD |
|----------|-----------|
| 100rpm | 0.010G |
| 300rpm | 0.025G |
| 500rpm | 0.5G |
| 700rpm | 0.8G |

48

## FIG. 24

(a) WATER EVENLY RETAINED
IN WATER TANKS

DIRECTION OF
ROTATION OF DRUM 3

WATER TANK

11a

WATER

ECCENTRIC LOAD
GENERATED
BY LAUNDRY

11b

3 DRUM

11d

11c

(b) ROTATION SPEED
REDUCED

11c

11b

11d

11a

11e

(c) AFTER BALANCING

11d

11c

11b

11a

## FIG. 25

FIG. 26

**REFERENCES CITED IN THE DESCRIPTION**

**Patent documents cited in the description**

- EP 0903845 A
- JP 2000117775 A
- JP 2000282350 A
- JP 2000288626 A
- JP 2000323651 A